# EUROPEAN PATENT SPECIFICATION

(11) **EP 4 543 195 B1**
(45) Date of publication and mention of the grant of the patent: **06.05.2026**
(21) Application number: 23749252.5
(22) Date of filing: 23.06.2023
(51) Int. Cl.: A01K 13/00

(54) **PROTECTIVE BOOT FOR AN EQUINE**
BEINSCHONER FÜR PFERDE
PROTÈGE-JAMBES POUR CHEVAUX

(30) Priority: 24.06.2022 US 202263355354 P; 07.10.2022 US 202263378791 P; 13.03.2023 US 202363489964 P
(43) Date of publication of application: 30.04.2025
(73) Proprietor: Achieve Equine, LLC, Delano, MN 55328 (US)
(72) Inventor: WEBER, Jan, Delano, MN 55328 (US); CHIAPETTA, James, R., Delano, MN 55328 (US); AFRICA, Tom, Joseph, Delano, MN 55328 (US); LORENZ, Michael, Anthony, Delano, MN 55328 (US); TOLLETT, Anne, Marie, Delano, MN 55328 (US); VITITOE, Kevin, John, Delano, MN 55328 (US); DALE, Theodore, Delano, MN 55328 (US)
(74) Representative: PGA S.p.A., Milano, Succursale di Lugano
(86) International application number: PCT/US2023/069000
(87) International publication number: WO 2023/250491

(56) References cited:
- GB-A- 2 444 770
- IT-A1- 201800 008 057
- US-A- 3 405 506
- US-A- 5 307 521
- US-A1- 2006 231 045

## Description

### TECHNICAL FIELD

The present disclosure relates to protective devices. In particular, the present disclosure relates to a protective system for an appendage of a human or an animal. The system can be configured as a boot for an animal, including, for example, a leg of an equine.

### BACKGROUND

Existing limb protective systems typically wrap around the limb fully enclosing the area covered, and thus, reducing airflow to and around the limb. For example, in the case of horses, "boots" are often used to encompass some or a portion of a lower region of a horse's leg for protection. GB 2 444 770 A discloses a protective horse boot of the related art. Often times, the protective boot is made from or includes a neoprene wrap that helps reduce injury to the limb due to interference or impact trauma to skin, tendons, and bone on one or more of the dorsal, palmar (plantar), medial or lateral aspects of a front or rear leg. Interference generally refers to hitting a region of the leg of the horse by a hoof (or other part of the anatomy) of a different leg. Injury can also occur due to impact of a region of the front or rear limb with, for example, an object such as a barrel, jump standard, stick, polo mallet, trees, bushes, rocks, and the like. However, a significant disadvantage to known protective boots is that they thermally insulate the lower portion of the horse's leg and trap heat inside the boot. Excessive heating of horses' lower limbs can contribute to, exacerbate, or directly cause tissue damage that may require prolonged periods of rest, therapy, or retirement from competition or exercise. Improvements to protective boot and leg systems are therefore desired.

### SUMMARY

A protective boot according to the invention is disclosed in any one of claims 1-14. The use of a protective boot according to the invention is disclosed in claim 15.

### DESCRIPTION OF THE FIGURES

The following drawing figures, which form a part of this application, are illustrative of the described technology and are not meant to limit the scope of the disclosure in any manner.
FIG. 1 is a schematic of equine distal front limb anatomy.
FIG. 2 is a side view of an exemplary protective boot for an equine leg in accordance with the principles of the present disclosure.
FIG. 3 is a cross-sectional view of the protective boot and equine leg shown in FIG. 2 and taken along line 3-3.
FIG. 4 is a side view of another exemplary protective boot for an equine leg in accordance with the present disclosure.
FIG. 5 is a side view of another exemplary protective boot for an equine leg in accordance with the present disclosure.
FIG. 6 is a perspective view of the protective boot shown in FIG. 5.
FIG. 6a is an embodiment of a cross-section of the protective boot shown in FIG. 6 taken along line 6a-6a.
FIG. 6b is another embodiment of a cross-section of the protective boot shown in FIG. 6 taken along line 6b-6b.
FIG. 6c is another embodiment of a cross-section of the protective boot shown in FIG. 6 taken along line 6c-6c.
FIG. 6d is another embodiment of a cross-section of the protective boot shown in FIG. 6 taken along line 6d-6d.
FIG. 7 is a side view of another exemplary protective boot for an equine leg in accordance with the present disclosure.
FIG. 8 is a proximal end view of the protective boot shown in FIG. 7.
FIG. 9 is a perspective view of the protective boot shown in FIG. 7.
FIG. 10 is a side view of another exemplary protective boot for an equine leg in accordance with the present disclosure.
FIG. 11 is a side view of another exemplary protective boot for an equine leg in accordance with the present disclosure.
FIG. 12 includes schematic views of exemplary surface structures that may be included with the protective boots described herein.
FIG. 13 is another schematic view of a surface structure that can be included with the protective boots described herein.
FIG. 14 is a schematic view of a strut or reinforcing member having different cross-sectional profile sections.
FIG. 15 is a schematic view of another strut or reinforcing member having a plurality of rings.
FIGS. 16a-d are perspective views of another exemplary protective boot in accordance with the present disclosure.
FIGS. 17a-d are perspective views of another exemplary protective boot in accordance with the present disclosure.
FIGS. 18a-e are perspective views of another exemplary protective boot in accordance with the present disclosure.
FIGS. 19a-f are perspective views of another exemplary protective boot in accordance with the present disclosure.
FIGS. 20a-d are perspective views of another exemplary protective boot in accordance with the present disclosure.
FIG. 21 is a perspective view of another exemplary protective boot in accordance with the present disclosure.
FIG. 22 is a schematic view of a protective boot on an equine leg in accordance with the present disclosure.
FIGS. 23, 24, 25, and 26a and b are schematic views of contact material for a rotational pad.
FIGS. 27a-c are perspective views of another exemplary protective boot in accordance with the present disclosure.
FIG. 28 is a perspective view of another exemplary protective boot in accordance with the present disclosure.
FIGS. 29a-c are perspective views of another exemplary protective boot in accordance with the present disclosure.
FIGS. 30a-d are schematic views of contact material for a longitudinal pad.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

While the present disclosure describes appendage protection systems embodied for use on the appendage of a horse such as a leg or limb, it should be appreciated that the disclosure and concepts herein also include application to appendages of a human or animal including any performance or non-performance animal, such as, but not limited to, camels, dogs, etc.

In embodiments suitable for horses, the protective system described herein is configured as a boot having an exterior surface facing away from the horse and an interior surface facing towards the horse. The protective boots include a cage comprising struts and, in some embodiments, struts and reinforcing members that provide protection to a horse's leg and openings within the cage that provide permeability of air flow (natural or added) towards and/or around the horse's leg through the protective boot so as to reduce the heating of the leg and associated anatomical structures caused by the insulative properties of currently available boots. In embodiments, the cage is configured to surround the entire circumference of the horse's leg. In other embodiments, the cage may not surround the entire circumference of the horse's leg, for example, the cage may not fully enclose the dorsal region of the leg or other areas. The cage includes a plurality of struts that may interconnect with reinforcing members with openings therebetween that allow air flow through the cage and/or the protective boot to reduce heating of the leg and facilitate convection cooling (e.g., sweat evaporation). The cage, however, does not include discrete channels for air flow; rather, the openings provide for air permeability throughout the cage as described herein. As used herein the cage, struts, and/or reinforcing members may be made from materials having appropriate flexibility, stiffness, impact resistance, compression resistance, and/or fracture resistance to reduce compression, impact, puncture, or other forces that the appendage may be subjected to. Often these forces can cause injury to the limb. Collectively herein, compression, impact, puncture, cutting, piercing forces, and other forces that can cause injury to the limb may be referred to as "traumatic forces".

In embodiments, the configuration and orientation of the struts and reinforcing members of the cage are arranged to provide protection from traumatic forces caused by, for example, impact of a hoof, other parts of the horse's anatomy, or other objects. In embodiments, the reinforcing members may be the same material or a different material than the struts and have the same, or greater or lesser size dimensions, and/or different physical or mechanical properties, to reduce the impact of the traumatic forces to protect the limb from injury due to traumatic forces. In embodiments, the struts and reinforcing members may be indistinguishable from each other in orientation or physical properties and provide a relatively symmetrical or asymmetrical appearance of the cage in a portion or over the entire surface of the cage.

The cage includes an outer surface (farthest from the horse's leg) and an inner surface (nearest to the leg). In embodiments, the cage can include additional component layers to reduce ingress of dirt or dust, provide brush protection, cushioning, impact dissipation, impact absorption, moisture wicking, temperature modulation, or other feature(s) or property(ies) as disclosed herein. The one or more additional component layers may be coupled to the outer surface or the inner surface of the cage. The configuration and arrangement of other structures, materials, and components of the protective boot may impact airflow or permeability provided by the cage. In embodiments, incorporating the cage configurations disclosed herein decreases the continuous surface area of the protective boot to provide increased air flow through and around the boot compared to the prior art and currently available boots. In addition, by reducing the continuous surface area, the overall weight of the boot may be advantageously reduced so as to reduce the pendulum affect caused by increased weight on the distal end of the swinging limb during motion. As used herein, the term "distal" refers to locations or areas situated away from the center of the horse, while the term "proximal" refers to locations or areas situated nearer to the center of the horse.

In embodiments, different sections of a protective boot incorporating the cage may provide different levels of air permeability through the boot from the exterior to interior surfaces and/or from the interior to exterior surfaces. In embodiments, at least 20% of the surface area of the cage and/or the protective boot, has an air permeability of at least 100 l/m²/s, in embodiments at least 200 l/m²/s, in embodiments at least 300 l/m²/s, in embodiments at least 400 l/m²/s, in embodiments at least 450 l/m²/s, in embodiments at least 480 l/m²/s, in embodiments at least 490 l/m²/s, in embodiments at least 500 l/m²/s, in embodiments at least 520 l/m²/s, in embodiments at least 530 l/m²/s, in embodiments at least 540 l/m²/s, in embodiments at least 550 l/m²/s, in embodiments at least 560 l/m²/s, in embodiments at least 570 l/m²/s, in embodiments at least 600 l/m²/s, in embodiments at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. For purposes here: l=liters, m=meters, and s=seconds. Testing can be done according to ISO Standard 9237 using a 20 centimeter squared (cm²) test area and 100 pascal (Pa) test pressure drop (hereinafter "100 Pa Test"). While air permeability is discussed herein as having l/m²/s units, it is appreciated that one of ordinary skill in the art would be able to measure and/or refer to air permeability with any other units of measurements as required or desired. For example, air permeability may be measured by cm³/cm²/s. In these units, the cage and/or protective boot may have an air permeability of at least 53 cm³/cm²/s, or more which can be calculated from the values provided above for the 100 Pa Test. In this example, 1 cm³/cm²/s is equal to 10 l/m²/s such that in order to arrive at the units of cm³/cm²/s from l/m²/s, the value of l/m²/s is divided by a factor of 10. In the examples, air permeability is not and is different than receiving air flow within a channel and changing it pressurization; rather, air permeability is air flow from outside of the boot to inside of the boot and as described herein.

Alternatively, testing may be performed using a 20 cm² test area and 200 Pa test pressure drop and similar ISO Standard 9237 (hereinafter "200 Pa Test"). Using the 200 Pa test, at least 20% of the surface area of the cage and/or the protective boot, has an air permeability of at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 840 l/m²/s, in embodiments at least 850 l/m²/s, in embodiments at least 860 l/m²/s, in embodiments at least 870 l/m²/s, in embodiments at least 900 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. While air permeability is discussed herein as having l/m²/s units, it is appreciated that one of ordinary skill in the art would be able to measure and/or refer to air permeability with any other units of measurements as required or desired. For example, air permeability may be measured by cm³/cm²/s. In these units, the cage and/or protective boot may have an air permeability of at least 84 cm³/cm²/s, or more which can be calculated from the values provided above for the 200 Pa Test.

In embodiments, different sections of the protective boot and/or cage may provide different percentages of total surface area that provide varying amounts of air permeability. In embodiments, at least 20%, in embodiments at least 25%, in embodiments at least 30%, in embodiments at least 35%, in embodiments, at least 40%, in embodiments at least 45%, in embodiments at least 50%, in embodiments at least 55%, in embodiments at least 60%, in embodiments at least 65%, in embodiments at least 70%, in embodiments at least 75%, in embodiments at least 80%, in embodiments at least 85%, in embodiments at least 90%, or more of the total surface area of the protective boot and/or cage provides air permeability levels in the ranges set forth above.

In still other embodiments, different sections of the protective boot and/or cage may provide different percentages of total surface area that provide varying amounts of air permeability, and an average of the total surface area of the protective boot and/or cage provides air permeability levels in the ranges set forth above. In this embodiment, the total surface area of the boot is divided into smaller segments and the air permeability of each segment is determined. Proportional averaging the air permeability of each segment is used to determine the overall average air permeability of the protective boot and/or cage.

In addition to other benefits, the protective boot and/or cages of the disclosure can facilitate cooling of an appendage during use. As used herein, the term "cooling" refers to reducing the increase of thermal energy from the horse or removal of thermal energy from the horse. Accordingly, cooling includes increasing evaporative cooling from the horse's skin via air flow to either lower its temperature or to counteract an increase in temperature due to internal or external factors. Cooling may (i) lower the temperature of all or a portion of the horse's leg below homeostatic temperature, (ii) maintain the temperature of all or a portion of the horse's leg at homeostatic temperature under conditions which would, but for the use of the protective boot described herein, cause elevation of the temperature above the homeostatic temperature, (iii) maintain the temperature of all or a portion of the horse's leg above homeostatic temperature which but for the use of the protective boot described herein, the temperature is below a temperature that all or the portion of the horse's leg would otherwise increase to under a particular condition; or (iv) reduce the rate of increase in temperature of all or a portion of the horse's leg which, but for the use of the protective boot described herein, would cause the temperature of all or a portion of the horse's leg to increase at a faster rate.

As an example, the "homeostatic" temperature of a horse is typically 37.5-38.5 °Celsius (C). Under some conditions of intensive exercise certain tissues of a horse's body, such as the superficial digital flexor tendon can reach temperatures of 45 °C or more. As used in this example, and unless otherwise stated, cooling via air flow, may lower the surrounding tissue (including skin) tendon temperature below 38.5 °C, maintain the temperature at 37.5-38.5 °C, or maintain the temperature below a temperature it otherwise would have reached using a conventional boot rather than the protective boot disclosed herein.

The cages disclosed herein may be combined with, incorporated into, or otherwise provided with a cooling article, such as, but not limited to the cooling articles described in International WO Publication No. 2022/011035, published January 13, 2022, and titled "Cooling Article and Method of Using the Same" and which is hereby incorporated by reference herein in its entirety.

The cages disclosed herein may be combined with, incorporated into, or otherwise provided with additional components to provide cushion, reduce impact shock, reduce friction, reduce moisture or dust ingress, etc. Examples are disclosed herein. In embodiments, regions of the boot and/or the cage may have reduced size or number of openings to provide increased continuous exterior surface continuity for structural reasons, esthetics, or other purposes.

Any direction when referring to the appendage or a region of a protective system, such as "proximal," "distal," "left, "right," "front," "rear," or other direction or orientation are used to provide clarity to the reader and are not to be considered limiting.

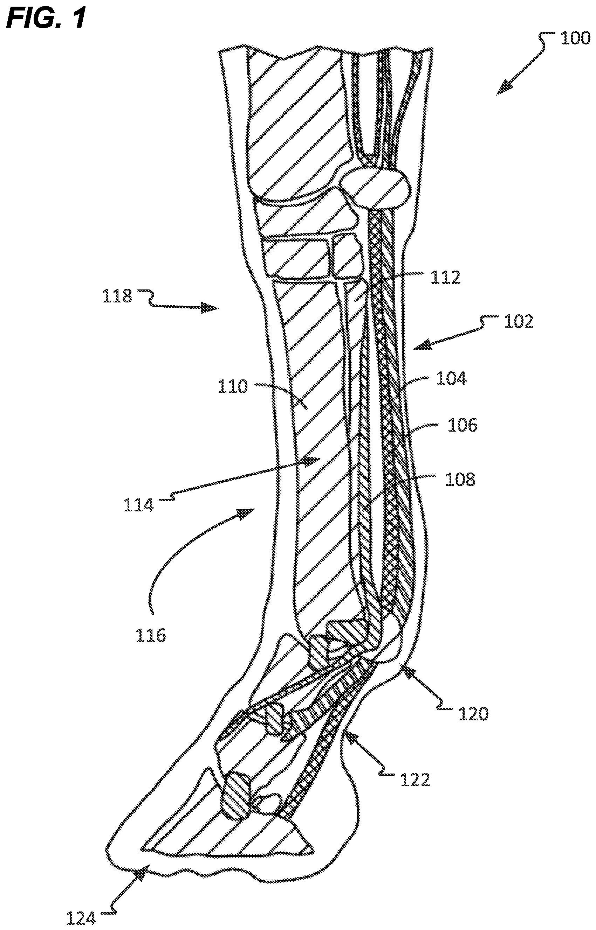

FIG. 1 is a schematic of equine distal front limb anatomy. As illustrated in FIG. 1, a distal region of a leg 100 is shown and includes various tendons on a palmar region 102 (e.g., back) of the leg 100. A superficial digital flexor tendon 104, a deep digital flexor tendon 106, and a suspensory ligament 108 are located palmar to a cannon bone 110 and a splint bone 112. These tendons and ligaments 104, 106, 108 in the horse are particularly susceptible to overheating, during exercise, for example, during competition or training, such as during running, jumping, endurance riding, horse racing, dressage, etc. While FIG. 1 illustrates a front leg, it will be recognized by one skilled in the art, that in the distal limb region the anatomy is paralleled in a rear leg.

In addition, blood supply (not shown) to the tendons and ligaments 104, 106, 108 and the leg 100 also flows along the palmar region 102, as well as a lateral region 114 (e.g., outside) and a medial region 116 (e.g., inside) of the leg 100. In contrast, a dorsal region 118 (e.g., front) of the leg 100 has fewer major vascular structures associated with it. The horse leg 100 also includes a fetlock joint 120, a pastern 122, and a hoof 124. In examples, the protective boots described herein may include cages configured with different shape and size openings at different locations that may not substantially decrease or inhibit air flow through the protective boot towards or around the horse leg 100, as well as to provide different levels of protection in particular areas of the leg 100.

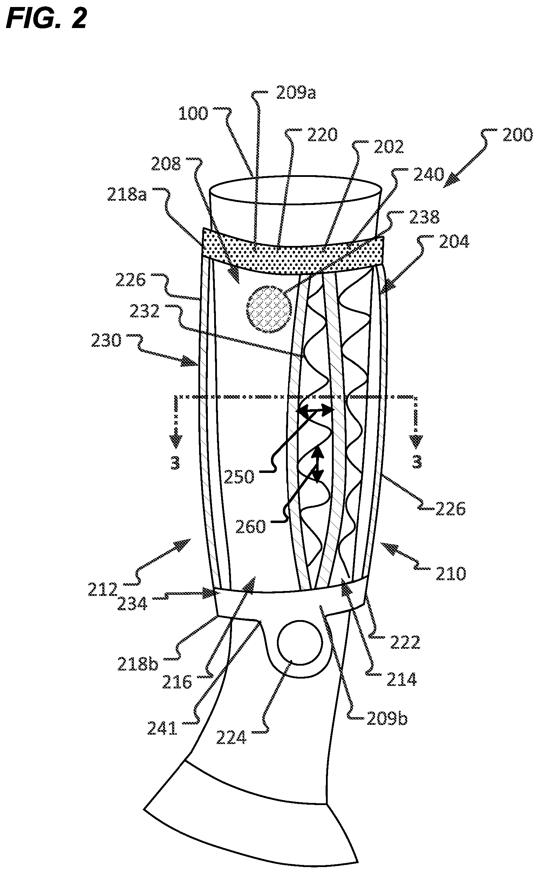

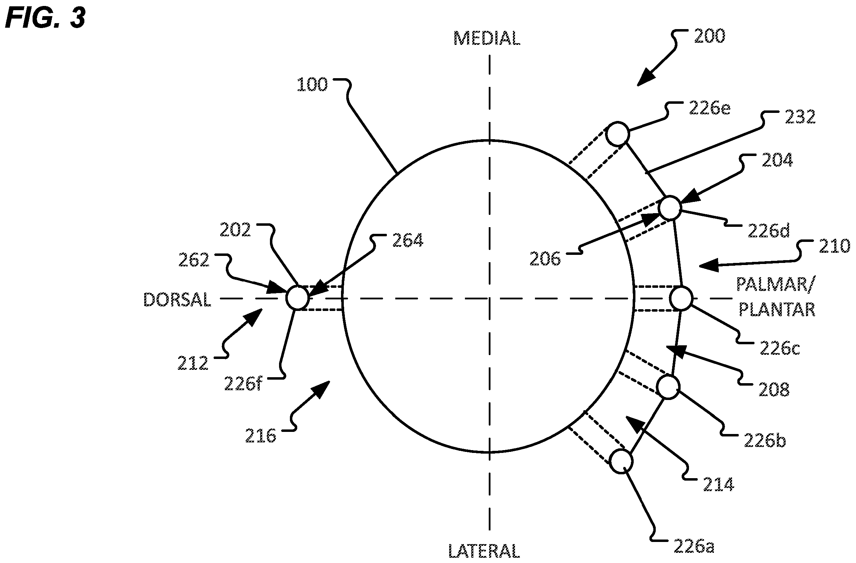

FIG. 2 is a side view of an exemplary protective boot 200 for an equine leg 100. FIG. 3 is a cross-sectional view of the protective boot 200 and the equine leg 100 taken along line 3-3 in FIG. 2. Referring to FIGS. 2 and 3, the protective boot 200 has an exterior surface 262 facing away from the horse and an interior surface 264 facing towards the horse. Protective boot 200 is configured to provide continuous surface area covering to selected regions of the horse leg 100, while in other regions there is less continuous covering to facilitate air flow around the horse leg 100. In the example, the protective boot 200 includes a cage 202 shaped and sized for the length and contours of the distal aspect of the horse leg 100. The cage 202 has an outer surface 204 and an opposite inner surface 206 that is adjacent the horse leg 100. A plurality of openings 208 are defined in the cage 202 and extend between the outer and inner surfaces 204, 206. The openings 208 are positioned, sized, and shaped to facilitate air flow through the protective boot 200 and facilitate air flow towards the horse leg 100 while still providing protection to the leg 100. The openings 208, however, are not inlets for channels that restrict or direct the path of flow of air throughout the boot.

In an exemplary embodiment, the openings 208 of some or all of the sections of the protective boot 200 may be at least 3 mm millimeters (mm) in diameter (e.g., a largest dimension), in embodiments least 5-7 mm, in embodiments at least 8-10 mm, in embodiments at least 11-15 mm, in embodiments at least 16-20 mm, in embodiments at least 21-25 mm, in embodiments at least 26-35 mm, in embodiments at least 36-50 mm, in embodiments at least 51-60 mm, in embodiments at least 61 mm, or greater. In embodiments, the openings 208 can be up to 5 centimeters (cm) or more. As will be described herein, different sections of the protective boot 200 can have openings 208 of different shapes and/or sizes. Accordingly, the cage 202 and/or the protective boot 200, may have at least a first set of openings and a second set of openings, with the shape and/or size of the first and second set of openings being different.

In exemplary embodiments, the openings and construction of the protective boot 200 provides an air permeability through sections of the boot of at least 100 l/m²/s, in embodiments at least 200 l/m²/s, in embodiments at least 300 l/m²/s, in embodiments at least 400 l/m²/s, in embodiments at least 450 l/m²/s, in embodiments at least 480 l/m²/s, in embodiments at least 490 l/m²/s, in embodiments at least 500 l/m²/s, in embodiments at least 520 l/m²/s, in embodiments at least 530 l/m²/s, in embodiments at least 540 l/m²/s, in embodiments at least 550 l/m²/s, in embodiments at least 560 l/m²/s, in embodiments at least 570 l/m²/s, in embodiments at least 600 l/m²/s, in embodiments at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. These air permeability values may be based on the 100 Pa Test.

Alternatively, the openings and construction of the protective boot 200 provides an air permeability through sections of the boot of at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 840 l/m²/s, in embodiments at least 850 l/m²/s, in embodiments at least 860 l/m²/s, in embodiments at least 870 l/m²/s, in embodiments at least 900 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. These air permeability values may be based on the 200 Pa Test.

The cage 202 includes a palmar/plantar section 210 that is positioned at the palmar/plantar region 102 (shown in FIG. 1) of the leg 100 and a dorsal section 212 that is positioned at the dorsal region 118 (shown in FIG. 1) of the leg 100. The palmar section 210 has first openings 214 defined therein that are shaped and sized to provide flow of air through and around at least a portion of palmar region 102 of the leg 100 and having an increased number of struts 226 for protection against contact from, for example, a rear hoof on the palmar, lateral or medial region of the leg 100. The dorsal section 212 has second openings 216 defined by fewer struts 226 to cover a reduced area of the dorsal region 118 of the horse leg 100 but still provide some protection against contact from external obstacles or other traumatic forces.

The protective boot 200 also includes one or more fasteners 218a and 218b for removably securing the protective boot 200 around the cannon bone of the horse's leg 100. Suitable fasteners 218a and 218b for maintaining position of the protective boot 200 are known in the art and are suitable for use as required or desired. For example, the fasteners 218a and 218b may be, but are not limited to, hook-and-loop (e.g., VELCRO), clips, snaps, buttons, buckles, magnetic buckles, ratchet straps, zippers, and the like, or a combination thereof. In the example, the fasteners 218a 218b may be a hook-and-loop type fastener.

The protective boot 200 may include a proximal connecting member 209a, a proximal attachment 220, a distal connecting member 209b, and a distal attachment 222 that may be integrated with or attached to cage 202. In embodiments, the proximal attachment 220 and/or the proximal connecting member 209a may also be part of the proximal perimeter frame 240 of cage 202 and the distal attachment 222 and/or the distal connecting member 209b may also be part of the distal perimeter frame 241 of cage 202. Each attachment 220, 222 can include the fasteners 218a and 218b for securing the protective boot 200 to the horse leg 100. In an aspect, the attachments 222 may be formed as bands that extend around the leg 100. In other aspects, the attachments 222 may not extend entirely around the leg 100. The protective boot 200 may include a distal shield 224 located distal to the distal attachment 222 on the medial, lateral, and/or palmar aspect of protective boot 200. The distal shield 224 may be contoured to conform with the specific region of the distal leg anatomy to provide protection to anatomy distal to the cannon bone and/or fetlock joint. The distal shield 224 may have a continuous outer and inner surface or have openings the same size or a different size than that on the proximal portions of the boot. The contour of the distal shield 224 may also or alternatively function to reduce the likelihood of rotation of the protective boot 200 around the horse's leg 100. In the embodiment of FIG. 2, the distal shield 224 is located on the lateral region of the fetlock joint and on the medial region of the fetlock joint (not visible in FIG. 2).

As shown in FIG. 3, the palmar/plantar section 210 of cage 202 includes a plurality of struts 226 extending between the proximal and distal attachments 220, 222. The first set of openings 214 are at least partially defined by lateral struts 226a and 226b, palmar strut 226c, and medial struts 226d, and 226e. Struts 226 connect to the proximal and distal perimeter frames 240, 241. The dorsal section 212 includes one or more dorsal struts 226f extending between the proximal and distal perimeter frames 240, 241. The second set of openings 216 are at least partially defined by the dorsal struts 226f and the proximal and distal perimeter frames 240, 241. In an alternative embodiment of FIGS. 2 and 3, the struts 226 may have a different spacing of the struts 226 around the leg 100, for example, four struts 226 may be positioned on the palmar section 210.

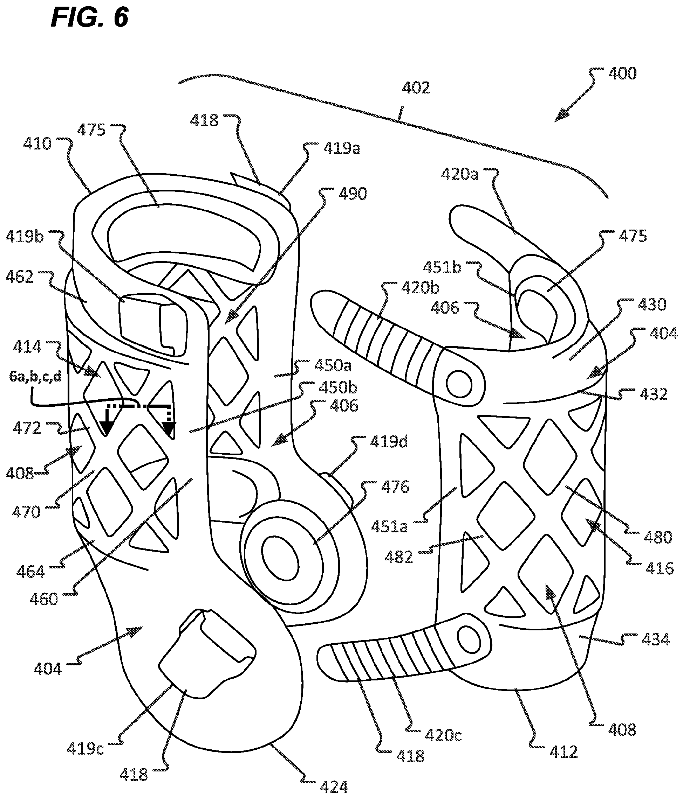

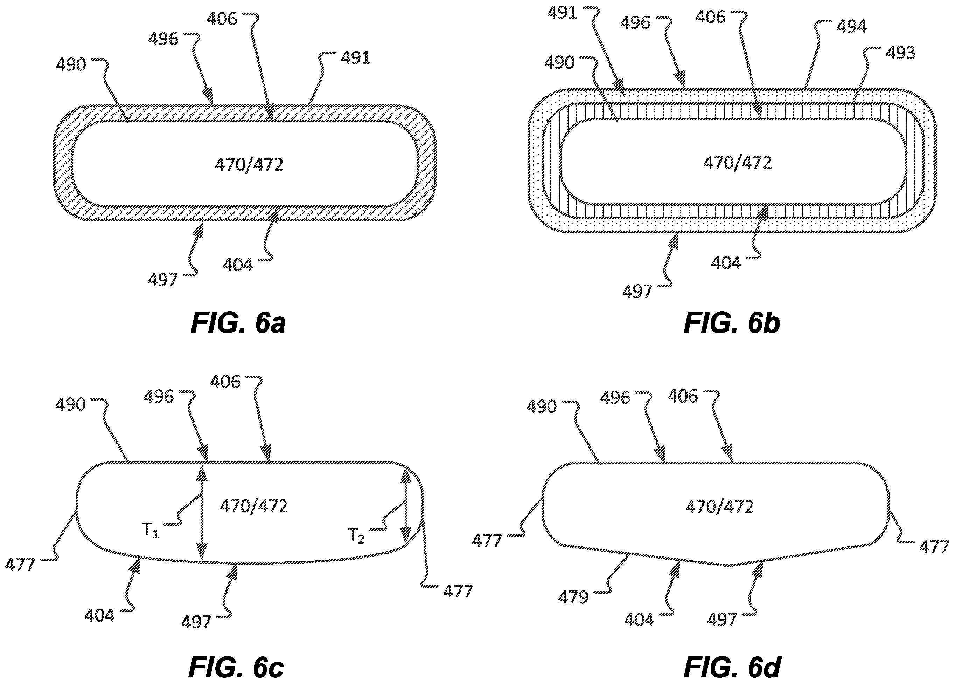

The struts 226 may have a similar cross-sectional profile and spacing or one or more struts 226 may be different than the others. As shown, the struts 226 have a substantially circular cross-sectional shape such that the exterior surface is curved. In other examples, the struts 226 may have a substantially D-shaped cross-sectional shape (e.g., as illustrated in FIGS. 6c and 6d and described further below). Other cross-sectional configurations to selectively direct airflow are also foreseen. In an example, one or more of the struts 226 may be radiused along their length such that when in use the strut 226 bows outwards away from the leg 100. In an aspect, the apex of this radiused shape occurs at the approximate middle of the length of the strut 226. The radiused shape of the struts 226 is configured to create a gap between the horse leg 100 and the cage 202 to facilitate air flow around the leg of the horse. In an aspect, the radiused struts 226 also provide additional protection from traumatic forces by providing increased shock absorption by the cage 202 having the ability to flex inwards prior to actual contact of the horse leg 100 by a traumatic force. The radius is selected to improve shock absorption without significant increase in overall diameter of the cage 202 and protective boot 200 to reduce likelihood of interference of the protective boot 200 with foot travel of the limbs.

The first set of openings 214 may be further defined by reinforcing members 232. In an embodiment, the reinforcing members 232 provide reinforcement of the struts 226 by being positioned to interconnect with each strut 226 to reduce lateral displacement of the struts 226 upon impact by a traumatic force. In the embodiment of FIG. 2, reinforcing members 232 are shown having a zig-zag pattern between each of the struts 226 (e.g., between lateral struts 226a and 226b, palmar strut 226c, and medial struts 226d, and 226e). Other pattern types are also contemplated herein, for example, reinforcing members 232 may be between the dorsal strut 226f and the lateral or medial struts.

In the embodiment of FIG. 2, there are shown major openings 250 between lateral struts 226a, 226b, palmar strut 226c, and medial struts 226d, 226e. In addition, first openings 214 include minor openings 260 between the struts and reinforcing members 232. A second set of major openings are shown between dorsal strut 226f and lateral strut 226a and of the second openings 216. An opening similar to major opening is not visible in FIG 2 that is present between dorsal strut 226f and medial strut 226e. In the embodiment of FIG. 2, there are no reinforcing members between dorsal strut 226f and lateral strut 226a and dorsal strut 226f and medial strut 226e. In the example, the openings 208 are completely open and substantially devoid of other components or structure so that air flow is minimally interrupted to facilitate evaporative cooling.

In other examples, a component layer 238, such as a brush layer may be attached to at least a portion of the outer surface 204 or the inner surface 206 of the cage 202 to decrease likelihood of abrasion by sticks, brush, or other objects and/or to reduce accumulation of dirt, sand, or other debris within the protective boot 200 while still facilitating air flow and allowing water to drain out. The brush layer may at least partially cover the openings 208 in this and other embodiments of the invention. In an aspect, the brush layer may be a single fabric layer that facilitates air flow therethrough. Fabrics that facilitate air flow may be considered "breathable fabrics" having material and weave structure that promote air flow through the protective boot and/or provide moisture-wicking away from the horse's leg.

In an example, the brush layer may be selected from breathable fabrics incorporating ultra-high molecular weight polyethylene fabrics such as Dyneema^{®} fabrics available from DSM N.V., Heerlen, Netherlands; Spectra^{®} Fiber fabrics available from Honeywell Performance Materials; carbon fiber fabrics; KEVLAR^{®} fabrics, etc. In another example, a cooling fabric layer may be used to provide cooling functionality by either temperature balance and/or temperature abatement. Fabrics that cool using temperature balance increase the wicking away of sweat and humidity and disperses it across the fabric's surface to evaporate faster, such as DRI-FIT from Nike and CLIMACOOL from Adidas. Temperature abatement, on the other hand, rapidly transfers heat away from the horse leg 100 through use of material such as heat-conductive polyethylene yarn.

In an embodiment, the protective boot 200 is defined between the proximal and distal perimeter frames 240, 241, and thus, has a total exterior surface area 230. The total exterior surface area 230 of the protective boot 200 includes both the continuous outer surface area of the cage 202 and the surface area of the plurality of openings 208 defined therein. In an aspect, when in use, the surface area of the plurality of openings 208 is greater than the continuous outer surface area of the cage 202 within the protective boot 200. In an alternative aspect, when in use, the surface area of the plurality of openings 208 is less than the continuous outer surface area of the cage 202 within the protective boot 200. Advantageously, by decreasing the continuous surface area of the cage 202, or increasing the air permeability from the exterior surface 262 through the interior surface 264 (or vice versa) of protective boot 200, air flow through and around the protective boot 200 is increased. In another aspect, the surface area of the plurality of openings 208 is greater than 20%, 30%, 40%, 50%, 60%, 70%, 80%, or even 90% of the outer surface area of the cage 202.

In an aspect, the surface contours of one or more of the struts 226 and reinforcing members 232 may be configured with one or more surface structures, such as a "fin" or a "baffle," to at least partially direct air flow into the openings 208 and towards areas of the horse leg 100 for increased air flow. For example, the surface structure may be configured to direct air flow during movement of the horse into the openings 208 of the cage 202. The use of surface structures such as fins or baffles, and/or the use of cross-sectional shapes of the struts and/or reinforcing members (e.g., a D-shape), are configured to direct air flow towards the adjacent openings and into the boot for increased air flow within the cage 202 and across the horse leg 100.

In the example, the cage 202 is formed from a structural material that mitigates injury from traumatic forces and is a component for maintaining the overall structure of the protective boot 200. Additionally, the structural material enables the openings 208 to be formed within cage 202 to facilitate air flow through the protective boot 200. As used herein, the term "structural material" is material that can absorb and/or deflect energy from a traumatic force in order to reduce the impact blow resulting therefrom to the horse leg 100 and which openings 208 can be formed therein.

In examples, the cage 202 may be formed from a structural material, such as a hard shell or a tear and puncture-resistant material such as a thermoplastic (e.g., high density or ultra-high density molecular weight polyethylene or polypropylene, acrylonitrile butadiene styrene (ABS), polyamide (e.g., nylon), polycarbonate (PC), polyethylene (PE), polypropylene (PP), or the like), polyethylene terephthalate (PET), polyethylene terephthalate glycol (PETG), ethylene vinyl acetate (EVA), polyurethane, polyamide block copolymers, thermoplastic elastomers (TPE) (e.g., thermoplastic polyurethane (TPU) and the like), polylactic acid (PLA), high impact polystyrene (HIPS), acrylic styrene acrylonitrile (ASA), polyvinyl alcohol (PVA), KEVLAR, GORILLA glass from Corning Inc. in Corning, NY, flexible ultra-thin glass from Schott AG in Mainz, Germany, flexible ceramic fibers from Eurekite BV in Enshede, Netherlands, metal filled filaments (including metal powder such as copper, bronze, brass, and stainless steel), wood filaments (includes a base material with wood dust, cork, and other powdered wood derivatives), carbon fiber, ceramic fibers, fiber reinforced polyamide, or a combination thereof. The structural material may even be a material that is not known now, but is developed in the future. In examples, additives may be included in the structural material that forms the cage 202. In an aspect, boron nitride or other heat absorbing material may be added to further help dissipate heat from the horse leg 100 and increase heat conduction of the cage 202.

In examples, the cage 202 can be formed from structural materials having a softer durometer that provides tear and puncture resistance but also pliability to permit flexibility and impact protection. Examples of such softer durometer structural materials include ethylene vinyl acetate (EVA) polyurethanes, polyamides, polyamide block co-polymers, etc. In an aspect, the cage 202 may be formed from a substantially deformable material, and the material is not substantially non-deformable.

At least a portion of the inner surface 206 of the cage 202 includes a contact material having a contact surface 234 that may directly contact the leg 100, or only contact leg 100 when impact forces the strut towards the horse's leg, or both. In an embodiment, the contact material may improve sweat removal or facilitate evaporative cooling. For example, the contact material may include HEIQ Cool textile technology from HeiQ Material AG. In embodiments, the contact surface 234 may include a contact material made of a material that provides cushioning, impact dissipation, impact absorption, or deflection beyond that provided by the material of the cage 202. In embodiments, the contact material can be located on only the inner surface 206 or the contact material may be located on both the inner surface 206 and outer surface 204. For example, the contact material can be applied only to the inner surface 206 or it may be applied via coating some or all of the struts 226 or reinforcing members 232. Such contact material may include impact resistant performance foams, natural or synthetic rubber (e.g., neoprene), viscoelastic polymers, elastic polymers such as ethylene vinyl acetate (EVA), closed cell EVA, polyurethanes (e.g., thermoplastic polyurethanes), silicon, non-Newtonian shear thickening type fluids (e.g., D3O^{®}), etc. and combinations thereof.

The contact material may create a closer fit of the cage 202 and the horse leg 100 to facilitate securement and/or reduce rotation of the protective boot 200 around the leg 100. The contact material is also described further below in reference to FIGS. 6a-d, 23-26b, and 30a-d.

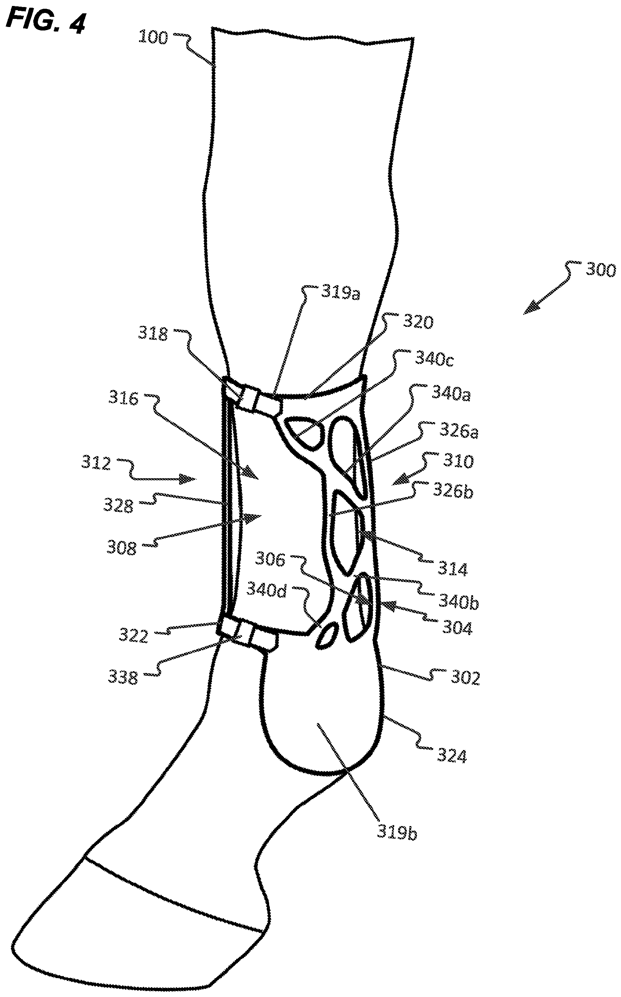

FIG. 4 is a side view of another exemplary protective boot 300 for the equine leg 100. The protective boot 300 is configured to provide protection from traumatic forces to the horse's leg 100 while facilitating air flow circulation around the horse leg 100. The protective boot 300 includes a cage 302 with an outer surface 304 and an opposite inner surface 306. A plurality of openings 308 of varying sizes are defined in the cage 302 and extending between the outer and inner surfaces 304, 306. The openings 308 are positioned, sized, and shaped to facilitate air flow through the protective boot 300 and towards the horse leg 100 while still providing protection to the horse leg 100.

The cage 302 includes a palmar section 310 and a dorsal section 312. The palmar section 310 has first openings 314 of various sizes located on the palmar section 310 and extending to the lateral and medial (not visible) section of the protective boot 300. The dorsal section 312 has second openings 316 larger than those of the palmar section 310 that extend to the lateral and medial (not visible) section of the protective boot 300. The protective boot 300 also includes a proximal fastener 318 and a distal fastener 338 for removably securing the protective boot 300 to the horse leg 100. The protective boot 300 includes a proximal connecting member 319a, and a proximal attachment 320 and a distal connecting member 319b, and a distal attachment 322. Distal to the distal attachment 322 there is a distal shield 324 on the lateral and medial aspect of the fetlock region of the horse's leg 100 (a medial distal shield is not visible). The distal shield 324 can be configured to conform to the fetlock joint and can, in some embodiments, extend beyond the fetlock and cover the pastern region to the hoof. The surface of the distal shield 324 can be continuous or include openings of varying sizes.

In embodiments, the palmar section 310 includes a plurality of longitudinally extending struts 326a, 326b extending between the proximal and distal attachments 320, 322. A plurality of reinforcing members 340a-340d are shown in various orientations relative to the struts 326a and 326b.

The dorsal section 312 includes at least one dorsal strut 328 extending between the proximal and distal attachments 320, 322. Additional struts can be positioned in and around the dorsal section 312 of the protective boot 300.

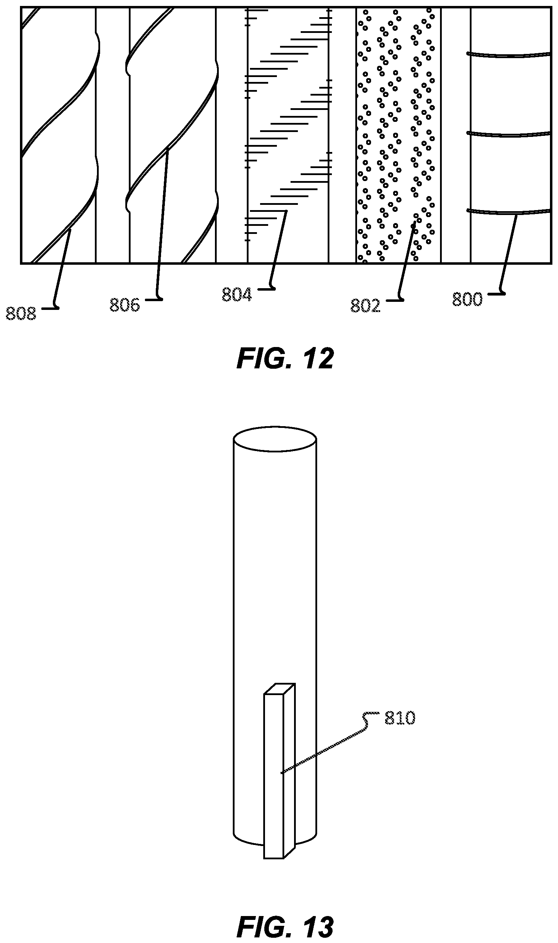

In the example, the palmar strut 326a and lateral strut 326b may be radiused or offset outward along their length such that during use there is a gap for air flow between the struts 326a and 326b and the horse's leg 100 and cage 302. The lateral strut 326b and the medial strut (not visible), are spaced on either side of the palmar strut 326a to provide additional protection from traumatic forces and further distribute the impact force. While three struts are shown protecting the palmar aspect of the limb, it will be appreciated that more struts can be provided while still advantageously providing for improved airflow over current boot systems. The struts 326, 328 may have a cross-sectional shape such that air flow over the outer surface 304 is directed towards the openings 308. For example, the struts 326, 328 may have a surface structure that is a D-shaped cross-sectional shape as illustrated in FIGS. 6c, 6d and described further below. In other examples, fins, baffles, or the like may be used as surface structures and as shown in FIGS. 12-15.

In an embodiment, the protective boot 300 is defined between the proximal and distal attachments 320, 322 (e.g., the perimeter frames), and thus, has a total exterior surface area. The total exterior surface area of the protective boot 300 includes both the continuous outer surface area of the cage 302 and the surface area of the plurality of openings 308 defined therein. In an aspect, the surface area of the plurality of openings 308 is greater than the outer surface area of the cage 302 within the protective boot 300. In another aspect, the surface area of the plurality of openings 308 is greater than 20%, 3%, 40%, 50%, 60%, 70%, 80%, or even 90% of the outer surface area of the cage 302.

In aspects, the openings 308 of the protective boot 300 may be similarly sized to the other openings described herein and/or include similar air permeability characteristics as described at other locations herein. Additionally, or alternatively, the protective boot 300 can include a contact material on a contact surface of the cage 302 that directly contacts the leg 100. Furthermore, the protective boot 300 may include a component layer, such as a brush layer, attached to at least a portion of the outer surface or the inner surface of the cage 302 and as described herein.

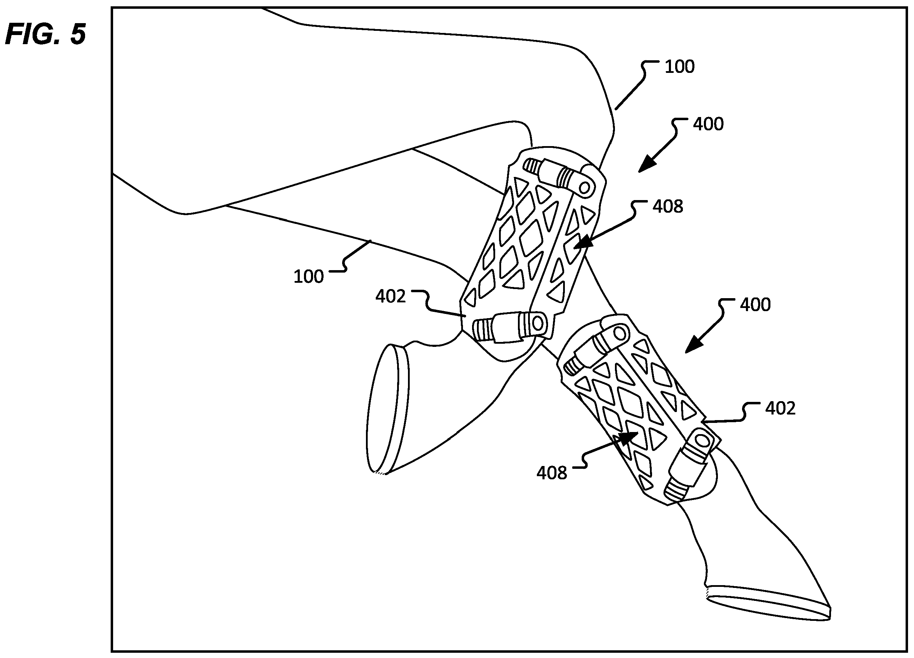

FIG. 5 is a side view of another exemplary protective boot 400 for the equine leg 100. FIG. 6 is a perspective view of the protective boot 400. Referring concurrently to FIGS. 5 and 6, the protective boot 400 is configured to provide protection to the horse leg 100 while reducing the continuous surface area of the boot to facilitate air flow towards and around the horse leg 100. The protective boot 400 includes a cage 402 with an outer surface 404 and an opposite inner surface 406. A plurality of openings 408 are defined in the cage 402 and extending between the outer and inner surfaces 404, 406. The openings 408 are positioned, sized, and shaped to facilitate air flow through the protective boot 400 and towards the horse leg 100 while still providing protection to the horse leg 100.

In the example, the cage 402 includes a palmar section 410 and a dorsal section 412. The palmar section 410 and the dorsal section 412 are discrete components that may be removably coupled together. As used herein, discrete means that the cage 402 has two or more individual and separable components that can be attached together forming the cage body and providing both protection and permeability. The palmar section 410 has first openings 414 defined therein and the dorsal section 412 has second openings 416 defined therein. The protective boot 400 also includes one or more fasteners 418 for removably securing the palmar section 410 and the dorsal section 412 together. The fasteners 418 include receptacles 419a-d that mate with adjustable ratchet straps 420a-c (420d not shown). As with all embodiments disclosed herein, other known fastener systems 418 for human and animal work or sports equipment may be used.

As illustrated, the palmar section 410 of protective boot 400 includes a perimeter frame 460 that includes a proximal section 462, a distal section 464, and a first and second side sections 450a and 450b extending between the proximal section 462 and distal section 464. Within the area of proximal section 462, distal section 464, and first and second side sections 450a and 450b there are the first openings 414 formed by interconnection of struts 470 and reinforcing members 472 that create a uniform diamond pattern. Other geometric configurations of the openings are contemplated herein, including, for example, circles, trapezoids, squares, rectangles, stars, etc. The first openings 414 in palmar section 410 can be any suitable dimension. In embodiments, the openings 414 can be at least 3 mm in diameter (e.g., a largest dimension), in embodiments at least 5-7 mm, in embodiments at least 8-10 mm, in embodiments at least 11-15 mm, in embodiments at least 16-20 mm, in embodiments at least 21-25 mm, in embodiments at least 26-35 mm, in embodiments least 36-50 mm, in embodiments at least 51-60 mm, in embodiments at least 61 mm, or greater. The cross-sectional thickness of the struts 470 or reinforcing members 472 can be about 1-10 mm, 11-20 mm, or larger as appropriate.

In embodiments, at least 20% of the surface area of the cage 402 and/or the protective boot 400, has an air permeability of at least 100 l/m²/s, in embodiments at least 200 l/m²/s, in embodiments at least 300 l/m²/s, in embodiments at least 400 l/m²/s, in embodiments at least 450 l/m²/s, in embodiments at least 480 l/m²/s, in embodiments at least 490 l/m²/s, in embodiments at least 500 l/m²/s, in embodiments at least 520 l/m²/s, in embodiments at least 530 l/m²/s, in embodiments at least 540 l/m²/s, in embodiments at least 600 l/m²/s, in embodiments at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. These air permeability values may be based on the 100 Pa Test.

Alternatively, the openings and construction of the protective boot 400 provides an air permeability through sections of the boot of at least 700 l/m²/s, in embodiments at least 710 l/m²/s, in embodiments at least 720 l/m²/s, in embodiments at least 750 l/m²/s, in embodiments at least 760 l/m²/s, in embodiments at least 770 l/m²/s, in embodiments at least 800 l/m²/s, in embodiments at least 840 l/m²/s, in embodiments at least 850 l/m²/s, in embodiments at least 860 l/m²/s, in embodiments at least 870 l/m²/s, in embodiments at least 900 l/m²/s, in embodiments at least 1000 l/m²/s, in embodiments at least 1200 l/m²/s, in embodiments at least 1400 l/m²/s, in embodiments at least 1600 l/m²/s, in embodiments at least 1800 l/m²/s, in embodiments at least 2000 l/m²/s, or more. These air permeability values may be based on the 200 Pa Test.

The dorsal section 412 of protective boot 400 also includes a perimeter frame 430 that includes a proximal section 432, a distal section 434, and second and third side sections 451a and 451b extending between the proximal section 432 and distal section 434, with the second openings 416 formed by interconnection of struts 480 and reinforcing members 482 that create a uniform diamond pattern. Other geometric configurations of the openings are contemplated herein, including, for example, circles, trapezoids, squares, rectangles, stars, etc. The opening size, strut size and thickness and air permeability are as stated previously for palmar section 410.

In the illustrated embodiment, the receptacles 419a and 419b are positioned on the proximal section 462 of palmar section 410 and receptacles 419c and 419d are positioned on the distal section 464 of the perimeter frame 460. Adjustable ratchet straps 420a and 420b are positioned on the proximal section 432 of dorsal section 412, and adjustable ratchet straps 420c and 420d are positioned on the distal section 434 of the perimeter frame 430. Additionally, or alternatively, fasteners 418 can be positioned in other locations on the protective boot 400.

As in other embodiments, features such as a distal shield 424 can be located on the distal section 434, 464 as required or desired. The cage 402 is manufactured from structural materials as described above. In addition, in some embodiments, at least a portion of the inner surface 406 of cage 402 may include a contact surface 490 that directly contacts the leg 100.

FIG. 6a is an embodiment of a cross-section through line 6a-6a of the strut/reinforcing member 470, 472 of the protective boot 400 having an interior surface 496 and an exterior surface 497. As illustrated, the contact surface 490 may include a contact material 491 that improves sweat removal, facilitates evaporative cooling, or reduces the impact of a traumatic force by, for example, improving impact absorption and deflection. In embodiments, the contact material 491 can be located on only the interior surface 496 (not illustrated) or also on the exterior surface 497 of the protective boot 400. For example, the contact material 491 can be applied or coated on some or all of the struts or reinforcing members (470,472,480,482). Suitable contact materials 491 include impact resistant performance foams, natural or synthetic rubber (e.g., neoprene), viscoelastic polymers, elastic polymers such as ethylene vinyl acetate (EVA), closed cell materials (e.g., closed cell EVA), polyurethanes (e.g., thermoplastic polyurethanes), silicon, non-Newtonian shear thickening type fluids (e.g., D3O^{®}), etc., and combinations thereof.

FIG. 6b is another embodiment of a cross-section through line 6b-6b of the interior surface 496 and the exterior surface 497 of the strut/reinforcing member 470, 472 of the protective boot 400. FIG. 6b is an alternative arrangement at the contact surface 490. In this embodiment, the contact material 491 includes a non-Newtonian shear thickening type fluid 493 surrounded by a thermoplastic polyurethane 494. In this embodiment, the contact material 491 is on the interior surface 496 and the exterior surface 497 of the protective boot 400. However, in other embodiments, the contact material 491 may be located only on the interior surface 496.

The contact material 491 may create a closer fit of cage 402 and the horse leg 100 to facilitate securement and/or reduce rotation of the protective boot 400 around the leg 100.

In the example, additionally, or alternatively, the contact material 491 can be provided as local padding 475, 476 in regions where anatomical features may benefit from increased padding such as near a proximal or distal edge or fetlock padding 476 inside the distal shield 424 around the fetlock joint.

FIG. 6c is another embodiment of a cross-section through line 6c-6c of the interior surface 496 and the exterior surface 497 of the strut or reinforcing member 470, 472 of the protective boot 400. In this example, the exterior surface 497 of the strut or reinforcing member 470, 472 is convex in shape such that air flow into the protective boot 400 is directed at least partially around the exterior surface 497 and towards the sides 477 so that air flows into the adjacent openings 414, 416 of the cage 402. For example, the cross-sectional shape of the strut or reinforcing member 470, 472 acts similar to an airfoil such that a pressure differential is generated and facilitates airflow into and towards the adjacent openings 414, 416. In an aspect, the interior surface 496 may be substantially planar while the exterior surface 497 is curved and defined at least partially by a radius. A middle portion of the strut or reinforcing member 470, 472 may have a thickness T₁ that is larger than a thickness T₂ at one or both of the sides 477. In an aspect, the cross-sectional shape of the strut or reinforcing member 470, 472 is substantially D-shaped. In another aspect, the exterior surface 497 may be domed. In still another aspect, the exterior surface 497 is not a planar surface. It is appreciated that either the strut 470 or the reinforcing member 472, or both the strut 470 and reinforcing member 472 may include such a cross-sectional shape.

FIG. 6d is another embodiment of a cross-section through line 6d-6d of the interior surface 496 and the exterior surface 497 of the strut or reinforcing member 470, 472 of the protective boot 400. In this example, the exterior surface 497 of the strut or reinforcing member 470, 472 includes a pair of oblique surfaces 479 that taper towards the interior surface 496 proximate the sides 477. This cross-sectional geometry similarly directs air flow around the exterior surface 497 and towards the sides 477 so as to flow into the adjacent openings 414, 416 if the cage 402. The middle portion of the strut or reinforcing member 470,472 has a thickness that is larger than the thickness of the sides 477. It is appreciated that either the strut 470 or the reinforcing member 472, or both the strut 470 and reinforcing member 472 may include such a cross-sectional shape.

The perimeter geometry of the exterior surface 497 of the strut or reinforcing member 470, 472 as shown in both FIGS. 6c and 6d is configured to direct airflow across the exterior surface 497 and towards the sides 477. This may be performed by enlarging the middle portions of the strut or reinforcing member 470, 472 and tapering (e.g., curved or linear) towards the sides 477 and the openings 414, 416 defined thereby. It is appreciated that other exterior geometric shapes may be alternatively used. These exterior perimeter geometry shapes facilitates aerodynamic performance of the protective boot 400 and air flow into the protective boot 400 and may be considered a surface structure as used herein. In additional examples, surface structures, such as, but not limited to fins, baffles, rings, dimples, etc. (e.g., as described in FIGS. 12-15 below) may additionally or alternatively be used to direct airflow towards the openings adjacent the strut and/or reinforcing member 470, 472.

While FIGS. 6c and 6d are not shown with contact material 491 covering at least a portion of the strut or reinforcing member 470, 472, it is appreciated that contact material 491 as described herein (e.g., FIGS. 6a and 6b) may be attached to the interior surface 496, the exterior surface 497, or the interior surface 496 and the exterior surface 497.

In aspects, the total exterior surface area of the protective boot 400 may have a ratio of openings 408 to continuous outer surface area of the cage 402 as described herein. Furthermore, the protective boot 400 may include a component layer, such as a brush layer, attached to at least a portion of the outer surface or the inner surface of the cage 402 and as described herein.

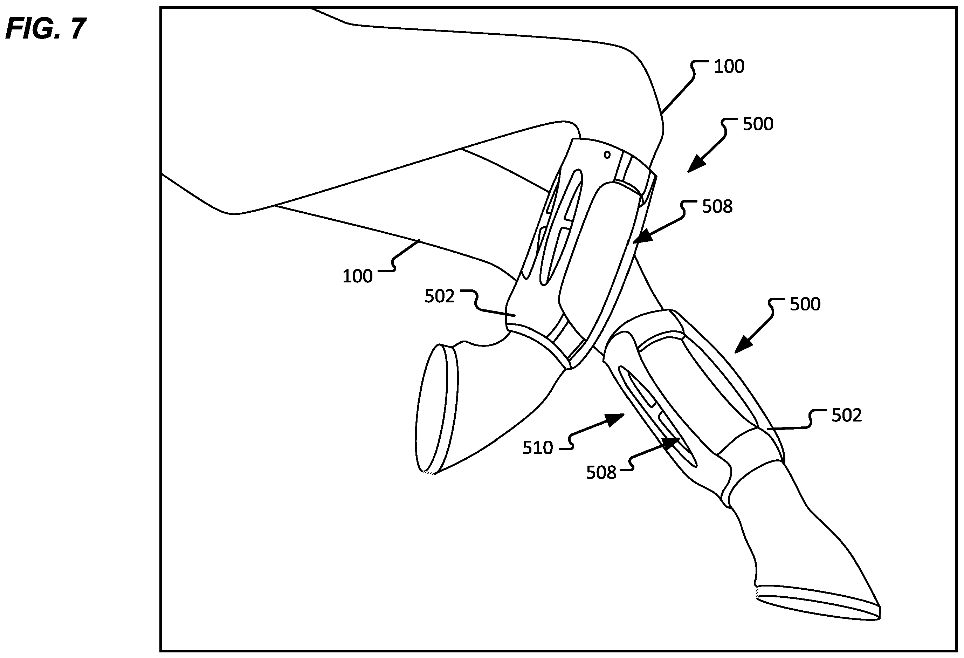

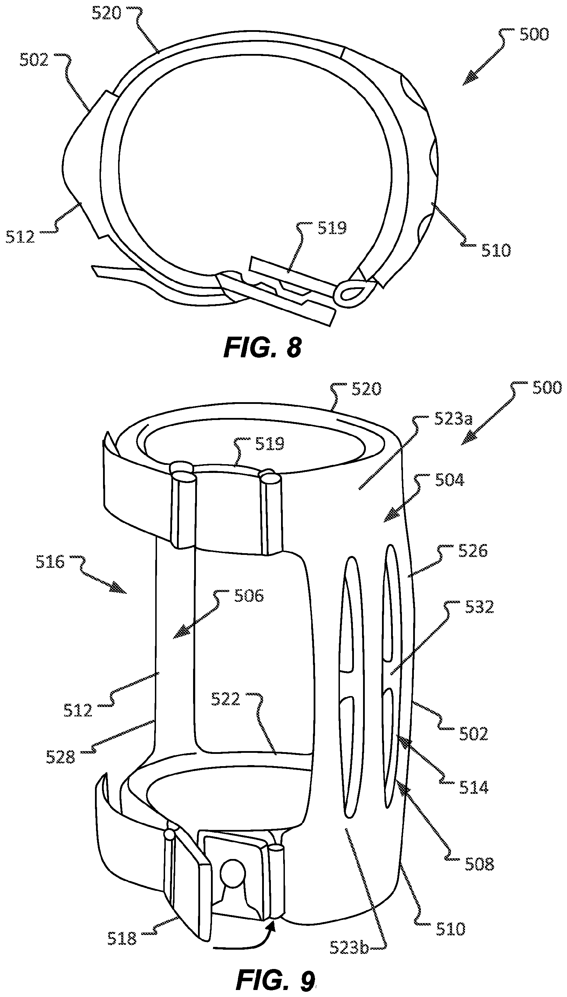

FIG. 7 is a side view of another exemplary protective boot 500 for the equine leg 100. FIG. 8 is a proximal end view of the protective boot 500. FIG. 9 is a perspective view of the protective boot 500. Referring concurrently to FIGS. 7-9, the protective boot 500 is configured to both provide protection to the horse leg 100 while facilitating air flow around the horse leg 100. The protective boot 500 includes a cage 502 with an outer surface 504 and an opposite inner surface 506. A plurality of openings 508 are defined in the cage 502 and extending between the outer and inner surfaces 504, 506. The openings 508 are positioned, sized, and shaped to facilitate air flow through the protective boot 500 and towards the horse leg 100.

In the example, cage 502 includes a palmar section 510 and a dorsal section 512. The palmar section 510 has a first openings 514 defined therein and the dorsal section 512 has second openings 516 defined therein. The protective boot 500 also includes one or more fasteners 518 and 519 coupled to the protective boot 500 for removably securing the protective boot 500 to the horse leg 100. Fasteners 518 and 519 may be an adjustable magnetic buckle, hook and loop, or other fastening system as previously described. The cage 502 may include a proximal attachment 520 and a distal attachment 522. The cage 502 may include a proximal connecting member 523a and distal connecting member 523b integrated with the proximal and distal ends of struts 526 and 528. In the example, the distal attachment 522 may be positioned near the fetlock joint of the horse leg 100.

The palmar section 510 includes a plurality of palmar struts 526 extending between the proximal and distal attachments 520, 522. The dorsal section 512 includes one or more dorsal struts 528 extending between the proximal and distal attachments 520, 522. In the example, the outer surface 504 of the palmar section 510 provides greater coverage for protection from traumatic impact than the outer surface 504 of the dorsal section 512. Reinforcing members 532 may extend between the palmar struts 526 for further impact protection. The struts 526, 528 and/or the reinforcing members 532 may be shaped to facilitate air flow across the outer surface 504 of the cage 502 and towards the openings 508. For example, the struts 526, 528 and/or the reinforcing members 532 may have a surface structure that takes the form of a D-shaped cross-sectional shape as shown in FIGS. 6c, 6d. In other examples, fins, baffles, or the like may be used as surface structures and as shown in FIGS. 12-15.

In aspects, the openings 508 of the protective boot 500 may be similarly sized to the other openings described herein and/or include similar air permeability characteristics as described at other locations herein. Additionally, or alternatively, the protective boot 500 can include a contact material on a contact surface of the cage 502 that directly contacts the leg 100 or only may contact on impact against a strut as described herein. Furthermore, the protective boot 500 may include a component layer, such as a brush layer, attached to at least a portion of the outer surface or the inner surface of the cage 502 and as described herein. In aspects, the total exterior surface area of the protective boot 500 may have a ratio of openings 508 relative to continuous outer surface area of the cage 502 as described herein.

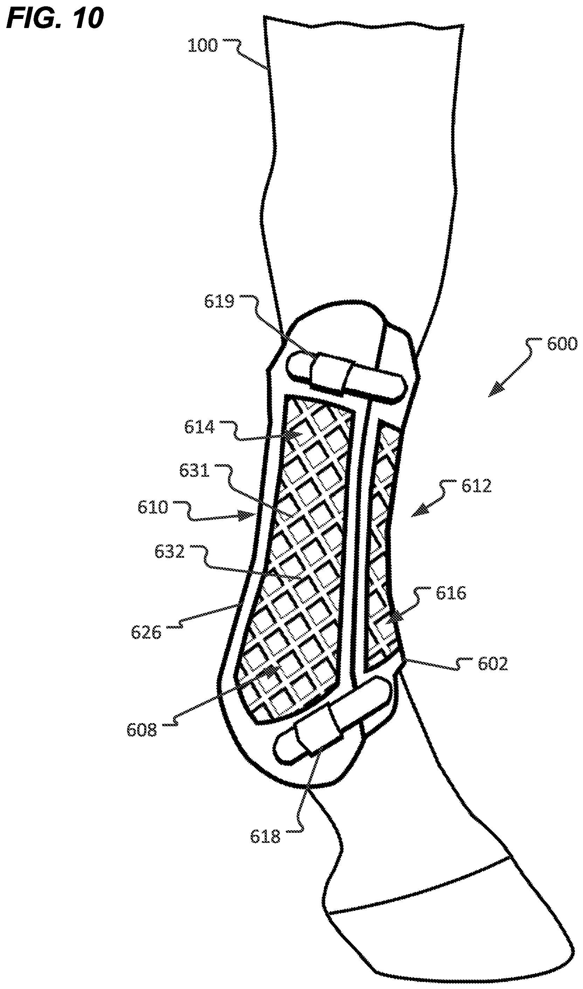

FIG. 10 is a side view of another exemplary protective boot 600 for an equine leg 100. In the example, the protective boot 600 is configured to provide protection from traumatic forces to the horse leg 100 while facilitating air flow around the horse leg 100. The protective boot 600 includes a cage 602 with a plurality of openings 608. The openings 608 are positioned, sized, and shaped to facilitate air flow through the protective boot 600 and towards the horse leg 100.

In the example, cage 602 includes a palmar section 610 and a discrete dorsal section 612. The palmar section 610 has first openings 614 defined therein and the dorsal section 612 has second openings 616 defined therein. The first openings 614 can be different in size or the same size as the second openings 616. Additionally, the palmar section 610 includes a palmar shield 626 with struts 631 and reinforcing members 632 disposed throughout. The palmar shield 626 can be made of the same material or a different material than the remainder of the cage 602. The openings 608 can be defined by one or more struts 631 and/or reinforcing members 632 and facilitate air flow through and around the protective boot while still providing protection from traumatic impact. The struts 631 and/or the reinforcing members 632 may be shaped to facilitate air flow across the outer surface 604 of the cage 602 and towards the openings 608. For example, the struts 631 and/or the reinforcing members 632 may have a surface structure that takes the form of a D-shaped cross-sectional shape as shown in FIGS. 6c, 6d. In other examples, fins, baffles, or the like may be used as surface structures and as shown in FIGS. 12-15.

The protective boot 600 also includes one or more fasteners 618, 619 coupled to the protective boot 600 for removably securing the protective boot 600 to the horse leg 100. The fasteners 618, 619 may be ratchet type fasteners or other fasteners systems as previously described.

In aspects, the openings 608 of the protective boot 600 may be similarly sized to the other openings described herein and/or include similar air permeability characteristics as described at other locations herein. Additionally, or alternatively, the protective boot 600 can include a contact material on a contact surface of the cage 602 that directly contacts the leg 100 or only may contact the leg upon impact against the cage or a strut as previously described herein. Furthermore, the protective boot 600 may include a component layer, such as a brush layer, attached to at least a portion of the outer surface or the inner surface of the cage 602 and as described herein. In aspects, the total exterior surface area of the protective boot 600 may have a ratio of openings 608 relative to continuous outer surface area of the cage 602 as described herein.

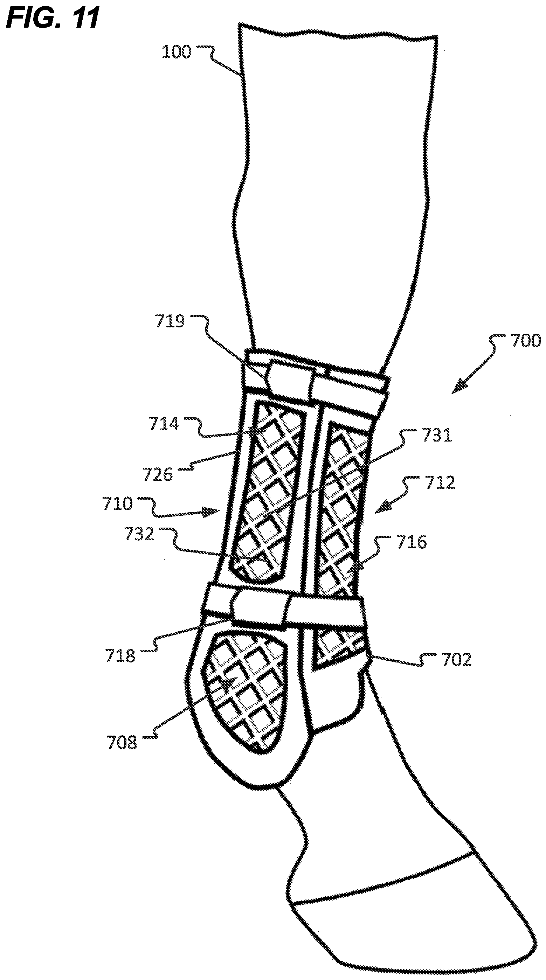

FIG. 11 is a side view of another exemplary protective boot 700 for an equine leg 100. In the example, the protective boot 700 includes a cage 702 with a plurality of openings 708. The openings 708 are positioned, sized, and shaped to facilitate air flow through the protective boot 700 and towards the horse leg 100.

In the example, cage 702 includes a palmar section 710 and a discrete dorsal section 712. In this example, the geometric openings in the palmar section 710 may be separated into different regions to accommodate the illustrated position of a fastener 718. The palmar section 710 has first openings 714 defined therein and the dorsal section 712 has second openings 716 defined therein. The first openings 714 can be different in size or the same size as the second openings 716. Additionally, the palmar section 710 includes a palmar shield 726. The palmar shield 726 can be made of the same material or a different material than the remainder of the cage 702. The openings 708 can be defined by one or more struts 731 and/or reinforcing members 732 and facilitate air flow through and around the protective boot while still providing protection from traumatic impact. In this embodiment, the openings extend further distally over a portion of the fetlock joint region of the equine leg 100.

The protective boot 700 also includes one or more fasteners 718, 719 coupled to the protective boot 700 for removably securing the protective boot 700 to the horse leg 100. The fasteners 718, 719 may be ratchet type fasteners or other fasteners systems as previously described.

In aspects, the openings 708 of the protective boot 700 may be similarly sized to the other openings described herein and/or include similar air permeability characteristics as described at other locations herein. Additionally, or alternatively, the protective boot 700 can include a contact material on a contact surface of the cage 702 that directly contacts the leg 100 as previously described herein. Furthermore, the protective boot 700 may include a component layer, such as a brush layer, attached to at least a portion of the outer surface or the inner surface of the cage 702 and as described herein. In aspects, the total exterior surface area of the protective boot 700 may have a ratio of openings 708 relative to continuous outer surface area of the cage 702 as described herein. The struts 731 and/or the reinforcing members 732 may be shaped to facilitate air flow across the outer surface 704 of the cage 702 and towards the openings 708. For example, the struts 731 and/or the reinforcing members 732 may have a surface structure that takes the form of a D-shaped cross-sectional shape as shown in FIGS. 6c, 6d. In other examples, fins, baffles, or the like may be used as surface structures and as shown in FIGS. 12-15.

FIG. 12 are schematic views of exemplary surface structures that may be included with the protective boots described herein. As described above, surface structures including the cross-sectional shapes of struts/reinforcing members are configured to direct air flow towards the adjacent openings and into the boot for increased air flow into the cage. In examples, surface structures are formed on the surfaces of the struts/reinforcing members and are configured to create turbulence within the air flow across the surface of the cage. By creating turbulence, air flow into the openings within the cage is facilitated.

In an aspect, a surface structure 800 may be a plurality of rings that project from the outer surface of the cage and the rings are spaced apart from each other. The spacing between rings may be a constant distance or a varied distance. In other examples, the rings may be formed as a recess within the outer surface. In another aspect, a surface structure 802 may be a plurality of dimples that project from the outer surface of the cage. The dimples may be formed as a pattern on the outer surface (e.g., dimples spaced apart in rows and/or columns, dimple groups spaced apart from each other, circle patterns, triangle patterns, square patterns, diagonal patterns, etc.). In other examples, the dimples may be formed as a recess within the outer surface.

In yet another aspect, a surface structure 804 may be a plurality of fins or baffles that project from the outer surface of the cage. The fins/baffles may extend horizontally on the outer surface (as illustrated in FIG. 12). In other examples, the fins/baffles may extend vertically or diagonally on the outer surface. In examples, the fins/baffles may be substantially rigid or may be substantially flexible. The fins/baffles may also be formed with a pattern on the outer surface, such as in a helix. In still another aspect, a surface structure 806 may be a projection in a helix shape on the outer surface. In another aspect, a surface structure 808 may be a recess in a helix shape on the outer surface.

FIG. 13 is another schematic view of a surface structure 810 that can be included with the protective boots described herein. The surface structure 810 is a projection formed as a fin or baffle that extends substantially vertically on the outer surface of the strut/reinforcing member and obstructing air flow around the surface of the strut/reinforcing member. In examples, the projection may extend the entire length of the strut/reinforcing member. In other examples, the projection may be less than the entire length of the strut/reinforcing member. These rings, dimples, fins, baffles, projection, recesses, etc. that form the surface structures create turbulence in the air flow across the strut/reinforcing members so as to facilitate air flow into the openings of the cage. The surface structures may be on the inner surface, the outer surface, or both the inner surface and outer surface of the cage. The surface structures do not form channels and do not restrict flow such that air flow is pressurized. Rather, the surface structures facilitate the amount of air that flows through the protective boots rather than pressurizing and channeling as described herein.

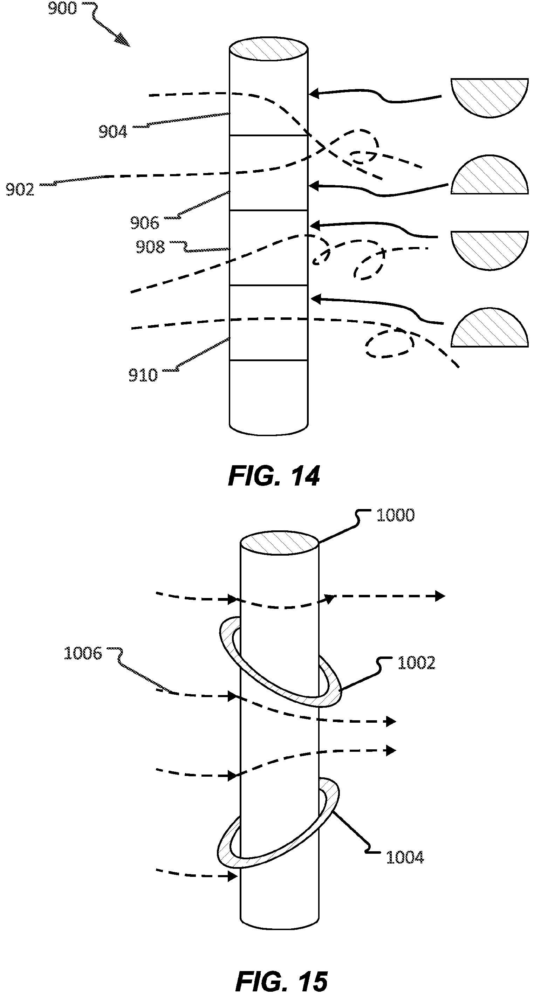

FIG. 14 is a schematic view of a strut or reinforcing member 900 that can be used with any of the examples described above. As discussed in reference to FIGS. 6c and 6d above, the cross-sectional shape of the strut and/or reinforcing member is substantially D-shaped, and this surface structure configuration facilitates directing airflow towards and into the openings adjacent to the strut/reinforcing member. In the example that is illustrated in FIG. 14, the strut or reinforcing member 900 has a plurality of sections 904, 906, 908, 910 and the orientation of the D-shaped cross-sectional profile can alternate between sections. For example, section 904 has the D-shape profile facing a first direction, while section 906 has the D-shape profile facing an opposite second direction. Section 908 may match section 904 and section 910 may match section 906. By alternating D-shape directions, air flow 902 across the strut or reinforcing member 900 creates pressure differences at different locations along the strut or reinforcing member 900 to increase volume of air flow. These pressure differences, however, do not create discrete or confined channels for airflow.

FIG. 15 is a schematic view of another strut or reinforcing member 1000 having a plurality of rings 1002, 1004. In this example, ring 1002 may be angled or skewed in an opposite direction from the ring 1004. The rings 1002, 1004 corroborate to generate different pressures along the length of the strut or reinforcing member 1000 as air flow 1006 passes from the upstream side towards the downstream side. The pressure changes along the length of the strut or reinforcing member 1000 can be used to direct airflow towards specific areas or openings adjacent the strut or reinforcing member 1000. The rings 1002, 1004 may be considered a surface structure or a feature that changes the cross-sectional profile of the strut or reinforcing member 1000. These pressure differences, however, are not within discrete channels.

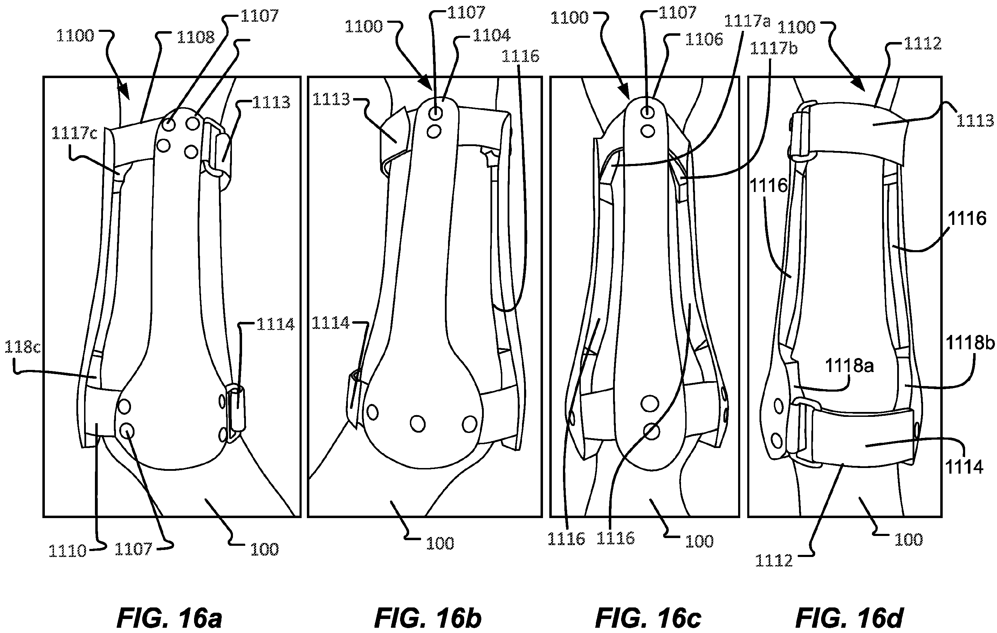

FIGS. 16a-d are medial, lateral, palmar/plantar, and dorsal perspective views, respectively, of another exemplary protective boot 1100 for an equine leg 100 and in accordance with the invention and the principles described herein. In this example, the protective boot 1100 includes discrete medial, lateral, and palmar/plantar struts 1102, 1104, 1106 extending between proximal connecting member and distal connecting member 1108, 1110. The illustrated connecting members are a different material from that of struts 1102, 1104, and 1106. The connecting members 1108, 1110 and struts 1102, 1104, and 1106 can be attached via rivets, screws or other suitable attachment system 1107. Alternatively, The construction material of connecting members 1108, 1110 can be rigid or pliable, and may be elastic to provide for shape memory deformability. Suitable materials are known in the art. Alternatively, the material of the connecting members 1108, 1110 can be the same material as the struts 1102, 1104, and 1106 and formed integrally and/or unitarily therewith. Proximal fastener 1113 and distal fastener 1114 includes a hook and loop system 1112 for securing the protective boot 1100 on the equine leg 100. Alternative fastener systems as described herein may be used.

The contact surface material is disposed on the inner surfaces of the cage as described above and below. The cage is configured to provide a gap 1116 between the struts and the leg. Although not illustrated, contact material is applied along the struts and still maintain the gap. In the embodiment of FIGS. 16a-16d, medial, lateral and palmar proximal contact material, 1117a-1117c respectively are provided. This may facilitate securement of protective boot 1100 from rotation or slipping during use. In addition, medial, lateral and palmar distal contact material, 1118a-1118c respectively are provided to facilitate securement of protective boot from sliding or rotating during use. Particularly advantageous configurations of contact materials are further described below. In addition, a brush layer as described herein, but not shown in FIGS. 16a-16d, can be applied over the openings or the entire cage.

The struts 1102, 1104, 1106 are configured to provide medial, lateral, and palmar/plantar protection, while the boot is open over the tendon with openings and gaps that reduce the likelihood of impact by the horse's foot or other object.

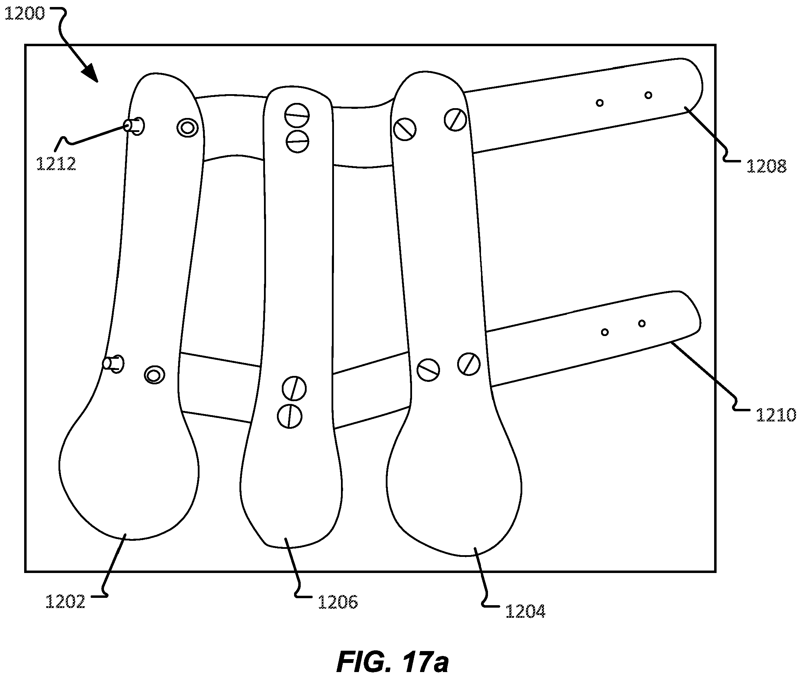

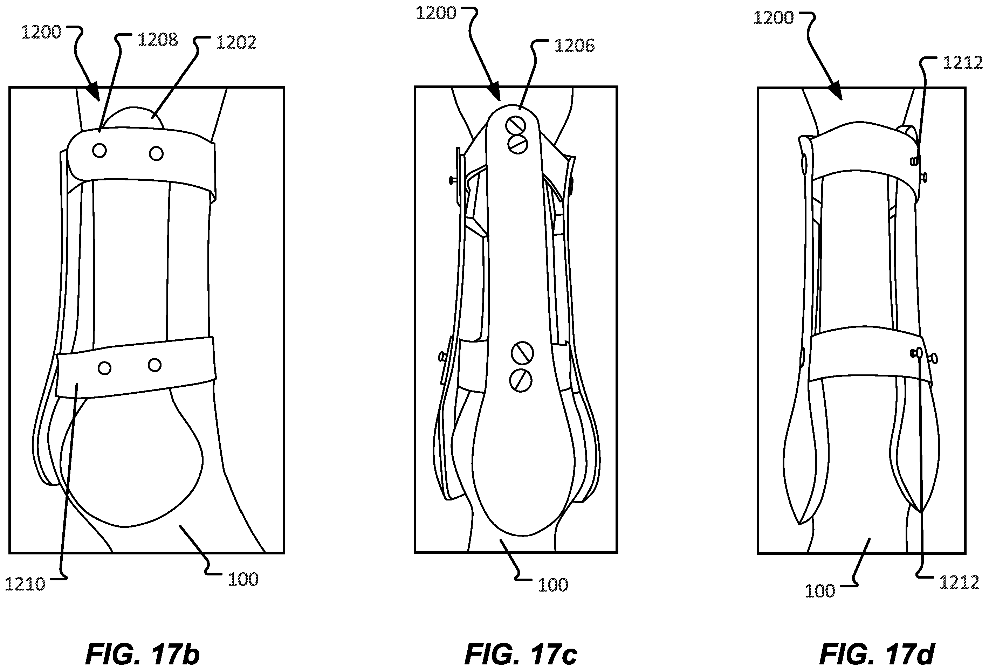

FIG. 17a is a perspective view of another exemplary protective boot 1200 and FIGS. 17b-d are lateral, palmar/plantar, and dorsal views, respectively, of the protective boot 1200 for an equine leg 100 and in accordance with the principles described herein. In this example, the protective boot 1200 includes discrete lateral, medial, and palmar/plantar struts 1202, 1204, 1206 extending between proximal and distal attachments or connecting members 1208, 1210. All or some of the features described for protective boot 1100 are applicable to the embodiment of protective boot 1200. In addition, rather than hook and loop system 1112 (shown in FIGS. 16a-d), each attachment 1208, 1210 includes an adjustable stud fastener 1212 for securing the protective boot 1200 on the equine leg 100. In an example, the attachments 1208, 1210 may be formed from leather, elastic, polymeric or other material suitable material.

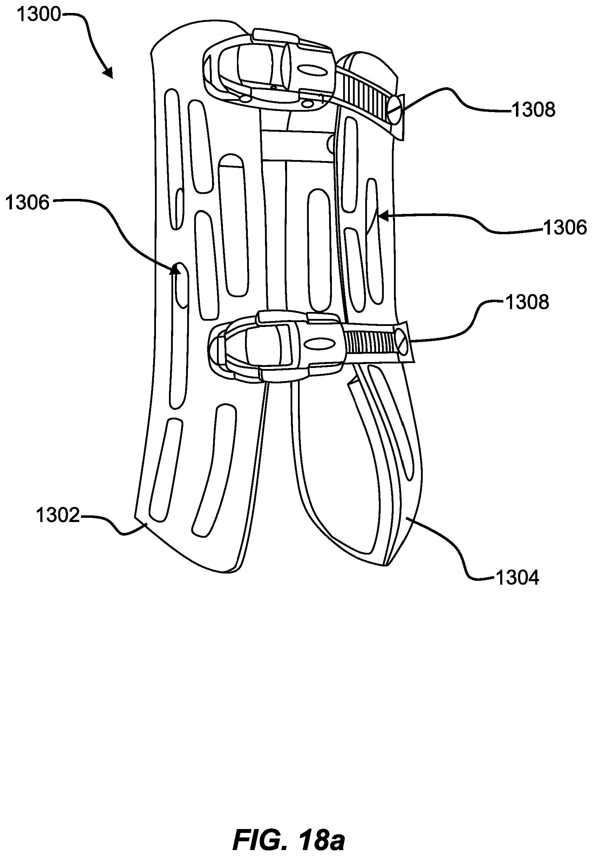

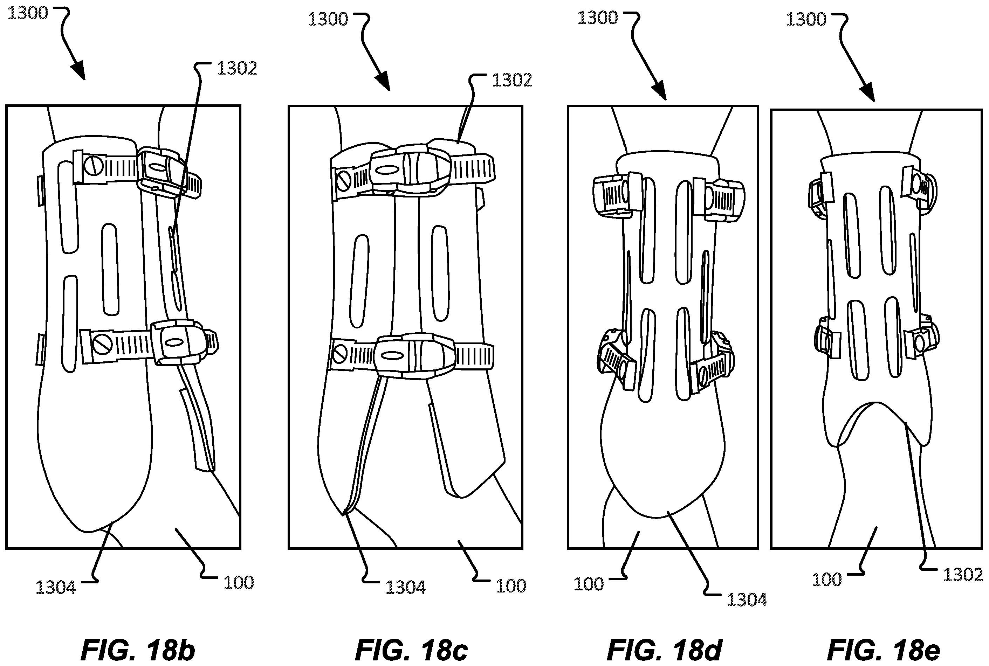

FIG. 18a is a perspective view of another exemplary protective boot 1300 and FIGS. 18b-e are lateral, medial, palmar/plantar, and dorsal views, respectively, of the protective boot 1300 for an equine leg 100 and in accordance with the principles described herein. In this example, the protective boot 1300 includes discrete palmar/plantar and dorsal sections 1304, 1302 with openings 1306 defined therein. The palmar/planter and dorsal sections 1304, 1302 are secured to the leg 100 by coupling together with rachet fasteners 1308. In this example, the openings 1306 extend substantially vertically. The sections are configured to provide medial, lateral, palmar/plantar protection, while the boot is open over the tendon with vertical openings and gaps that reduce impact by the arc of a shoe. The protective boot 1300 also has spacing between the inner surface of the boot and the skin. Padding and internal and external layers as disclosed herein can be provided. The protective boot 1300 has a "clam shell" configuration with closures on the medial and lateral aspects for attaching the boot. Contact material as disclosed for other embodiments herein may be disposed on the inner surfaces of the sections.

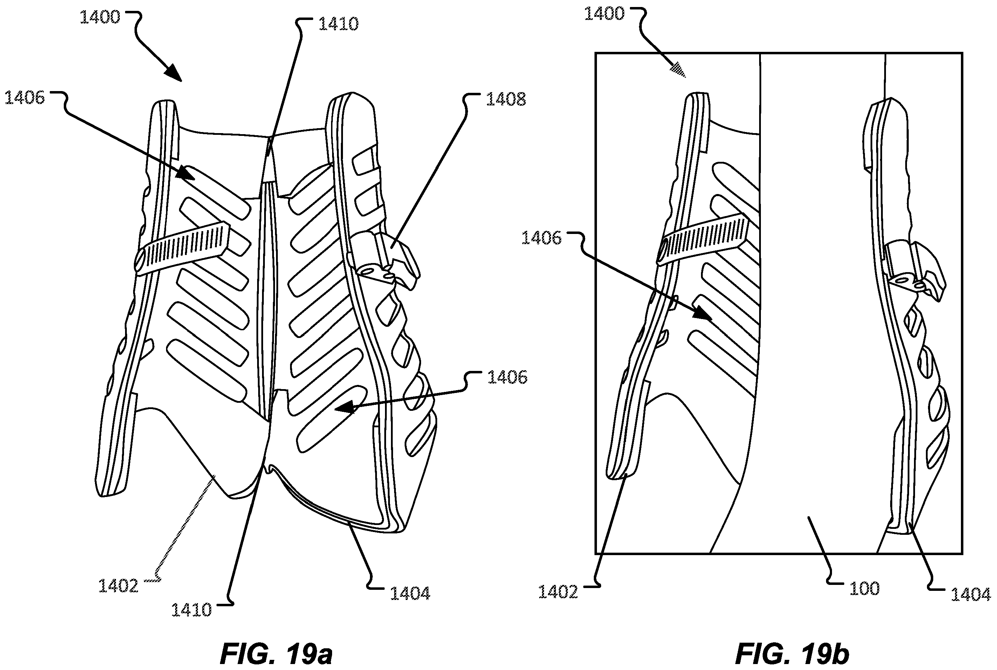

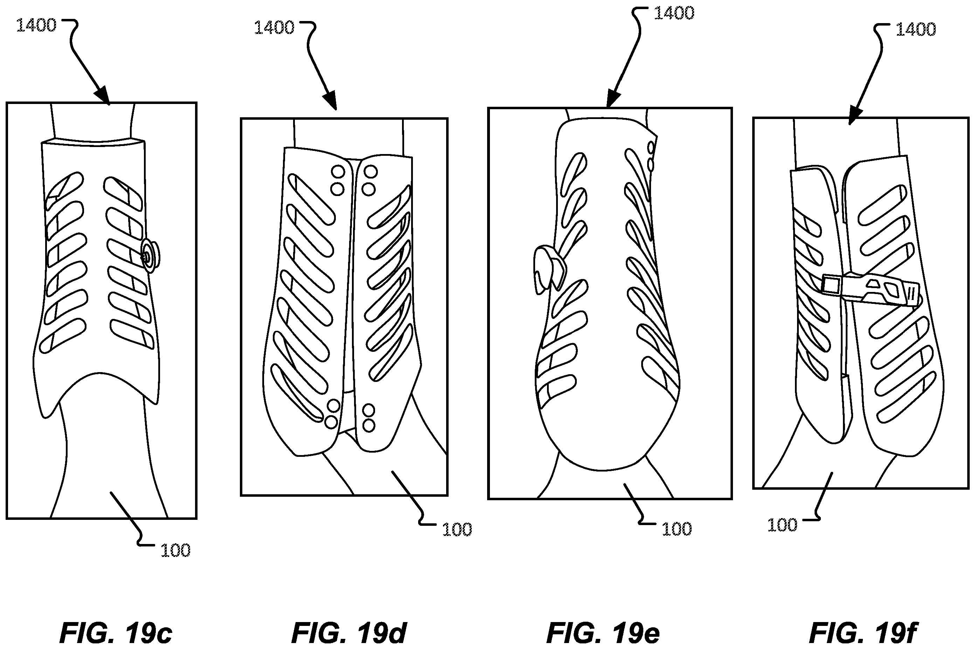

FIG. 19a is a perspective view of another exemplary protective boot 1400, FIG. 19b is a perspective view of the protective boot 1400 in an open configuration, and FIGS. 19c-f are dorsal, medial, palmar/plantar, and lateral views, respectively, of the protective boot 1400 for an equine leg 100 and in accordance with the principles described herein. FIG. 19b illustrates the boot positioned on the leg 100 prior to securement. In this example, the protective boot 1400 includes sections 1402, 1404 with openings 1406 defined therein. The dorsal and palmar/plantar sections 1402, 1404 are coupled together with a single rachet fastener 1408 for securing the protective boot 1400 on the equine leg 100. Hinges 1410 may also couple the dorsal and palmar/plantar sections 1402, 1404 together. In this example, the openings 1406 extend at an angle relative to horizonal and are spaced apart from each other in a vertical direction. Different sets of openings 1406 may have opposite angle orientations. Contact material and other materials, features and layers as disclosed for other embodiments herein may be disposed on the cage. The boot is open over regions of the palmar surface (FIG. 19e) with slanted openings and struts/reinforcing members that reduce impact by a horse's shoe. The protective boot 1400 also has spacing between the inner surface of the boot and the skin. Padding and internal and external layers as disclosed herein can be provided. The protective boot 1400 has a closure on the lateral aspect and a hinge on the medial side of the boot for opening and closing and reducing possibility of interference of a hinge on the medial aspect of the leg.

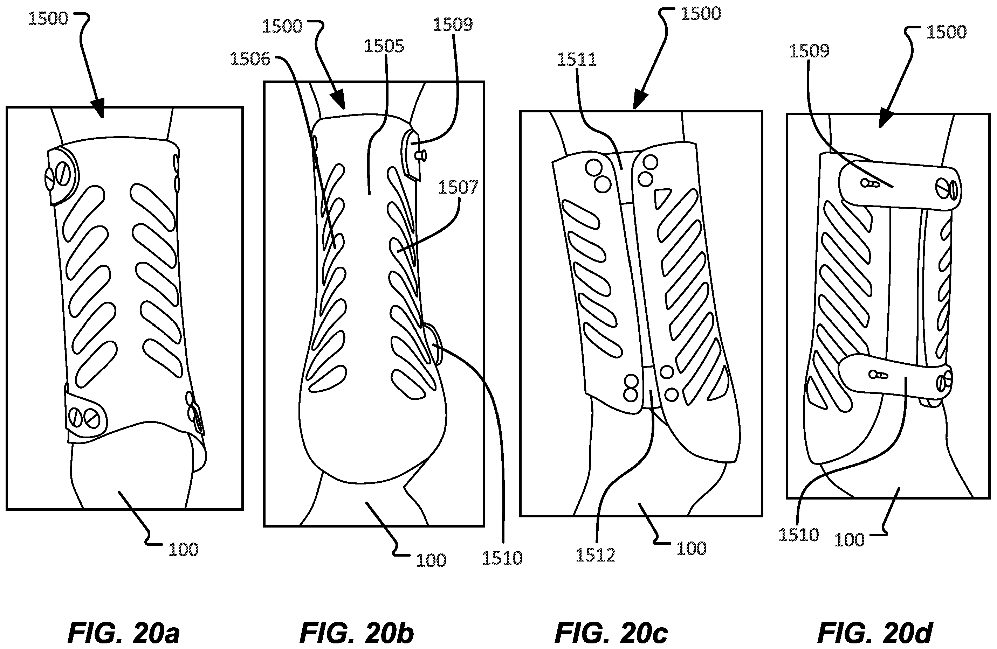

FIGS. 20a-d are perspective views of a protective boot 1500 for an equine leg 100 and in accordance with the principles described herein. The sections of the protective boot 1500 are configured to provide dorsal, palmar/plantar, medial, lateral, protection, while the boot includes a palmar/plantar strut 1505 with slanted openings medial 1506 and lateral 1507 that reduce the chance of impact by the horse's shoe. The protective boot 1500 also has spacing between the inner surface of the boot and the skin. Padding and internal and external layers as disclosed herein can be provided. In this example, the protective boot 1500 has proximal 1509 and distal 1510 stud fastener closures, and proximal 1511 and distal 1512 hinges on the medial side of the boot proximate one side of the medial openings 1506 for opening and closing.

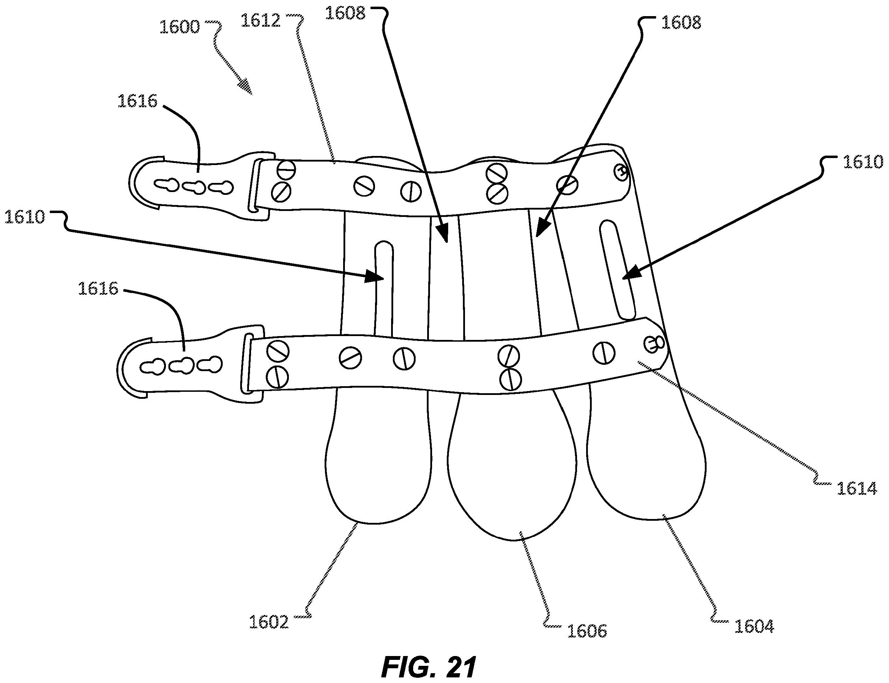

FIG. 21 is a perspective view of a protective boot 1600 laid flat before application. This embodiment is similar to protective boots 1100 and 1200 described above and provides openings 1608 between the struts 1602, 1604, and 1606 and additional openings 1610 defined within the struts 1602 and 1604 that facilitate air flow and still reduce the chance of impact by the horse's foot or other object. While the openings 1610 of the struts 1602 and 1604 do not extend below the distal attachment 1614 one or both could extend further distal. In the example, the palmar/plantar strut 1606 does not include an opening. In other examples, the palmar/plantar strut may include an opening. The struts 1602, 1604, 1606 are discrete from one another and are coupled together via the proximal and distal attachments 1612, 1614, respectively. As such, the outer edges of the struts 1602, 1604, 1606 define openings 1608 within the protective boot 1600 that extend substantially vertically and between the attachments 1612, 1614. The protective boot 1600, when in use, also may provide spacing between the inner surface of the boot and the skin to facilitate air flow. Padding and internal and external layers as disclosed herein can be provided. In this example, the protective boot 1600 has an adjustable stud fastener closure with a tab handle 1616 at the proximal and distal aspect of the boot for opening and closing. Alternative fasteners can be used as disclosed herein.

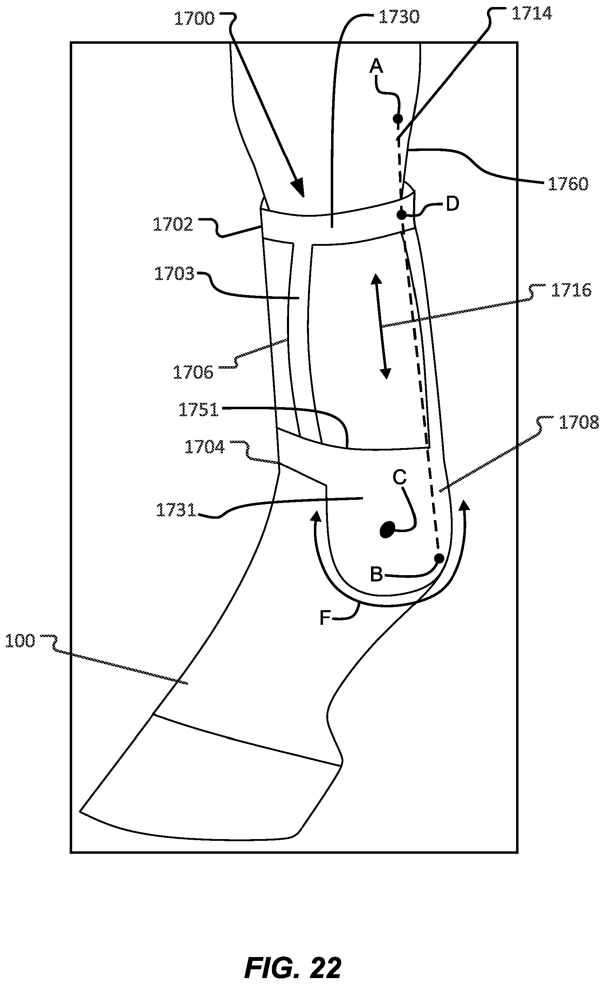

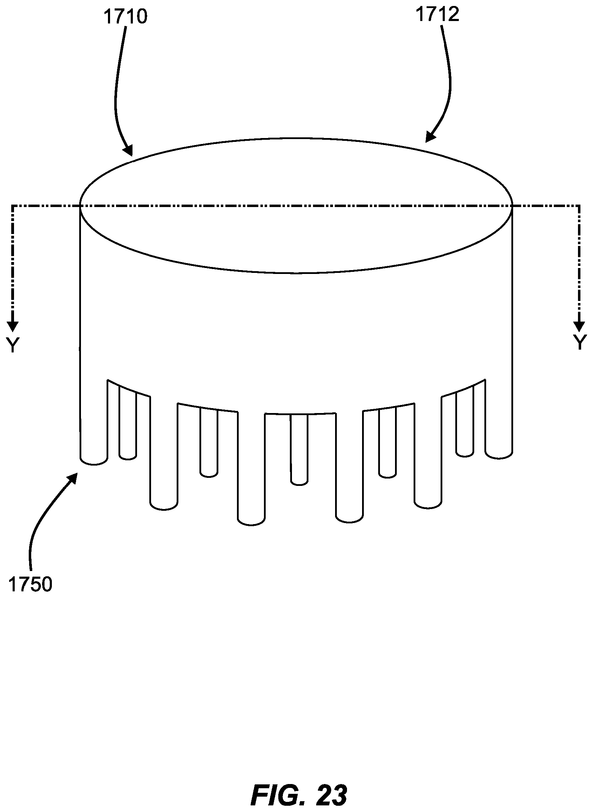

FIG. 22 is a schematic view of a protective boot 1700 on the equine leg 100 including a cage 1703. The protective boot 1700 is representative of any of the protective boot configurations described herein and generally includes a proximal connecting member 1730, distal connecting member 1731, proximal attachment 1702, distal attachment 1704, and one or more struts 1706 extending therebetween. Distal connecting member 1731 includes a distal shield 1708 that extends over the fetlock region. Contact surface material 1710 (shown in FIGS. 23-26a and b and 30a-d) may be provided anywhere on the inside of the cage 1703 and particularly between the inside of the proximal and/or distal attachment 1702, 1704 and distal shield 1708. As will be described, particular configurations of protuberances 1750 on contact surface materials 1710 shown in FIGS. 23-26 advantageously provide for reducing the likelihood of slipping or rotation of the protective boot 1700 during use and reduce likelihood of producing negative consequences of securement induced pressure on the leg.

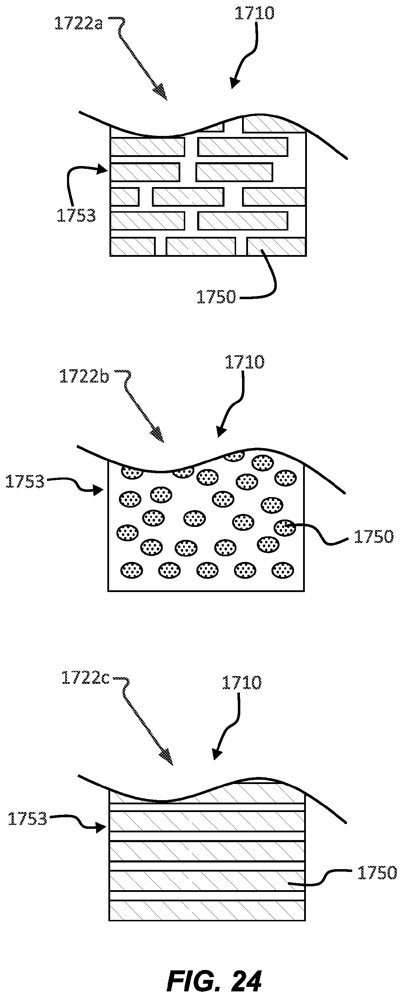

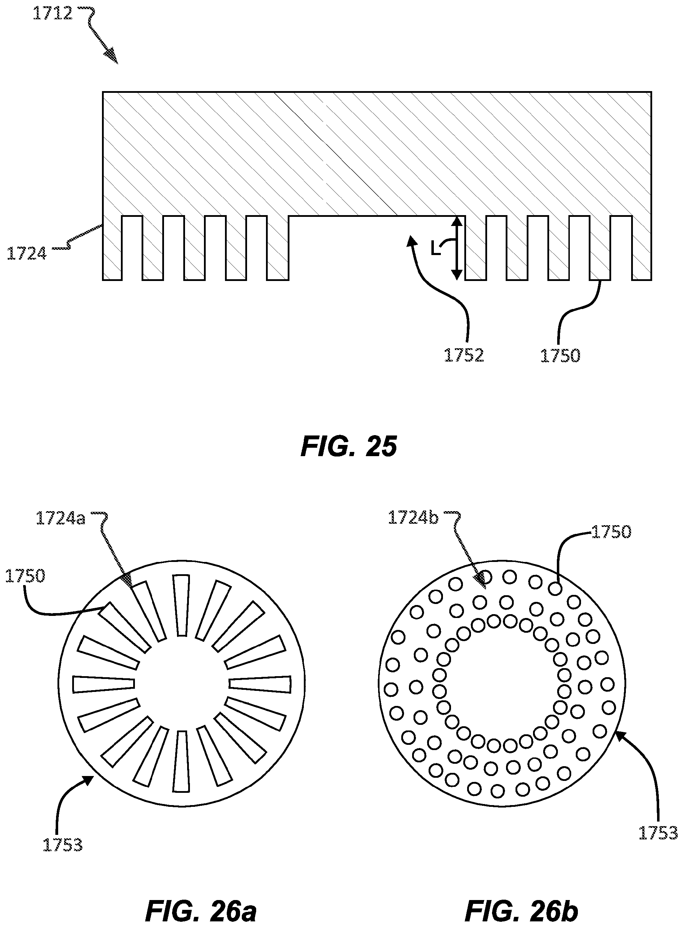

Referring to FIG. 22 it will be appreciated that during use, rotation of the horse's fetlock during flexion and extension of the joint occurs around point C. Providing contact material 1710 inside distal shield 1708 in the area defined by arc F and extending to the proximal aspect 1751 of distal attachment 1704 provides for protection from compression pressure potentially caused by tight securement of distal attachment 1704. Referring to FIG. 23, contact material 1710, is constructed in a rotational pad 1712 configuration having protuberances 1750 oriented circumferentially around the rotational pad 1712. As shown in cross-sectional view in FIG. 25 taken along diameter Y-Y of rotational page 1712 shown in FIG. 23, the central area 1752 of rotational pad 1712 may be void of protuberances 1750. Hence, when protective boot 1700 is secured to the leg 100 at distal attachment 1704, protuberances 1750 may be compressed along longitudinal axis L to provide pliable compression resistance and securement while allowing for rotational movement along the length of protuberance 1750 as the joint flexes and extends during movement. In alternative embodiments, central area 1752 may include protuberances 1750 (not illustrated) as well. FIGS. 26a and 26b are views of alternative embodiments of protuberance configuration of rotational surface 1753. FIG. 26b illustrates the protuberances 1750 having the circular cylindrical configuration 1724b also shown in FIGS. 23 and 25. FIG. 26a illustrates the protuberances 1750 having a rectangular cylindrical configuration 1724a. FIG. 24 are inside views of rotational surfaces 1753 having alternative arrangements and configurations (1722a-1722c) for suitable for protuberances 1750 of a rotational pad 1712 of contact material 1710.

Referring again to FIG. 22, it will be appreciated that during movement the skin 1760 overlying the palmar/plantar surface of the leg 100 moves proximal and distal along the direction of arrow 1716. This motion of the skin 1760 may be subject to increased friction against contact material 1710 particularly at contact points B and D along line A that may occur under distal attachment 1704 and proximal attachment 1702, respectively.

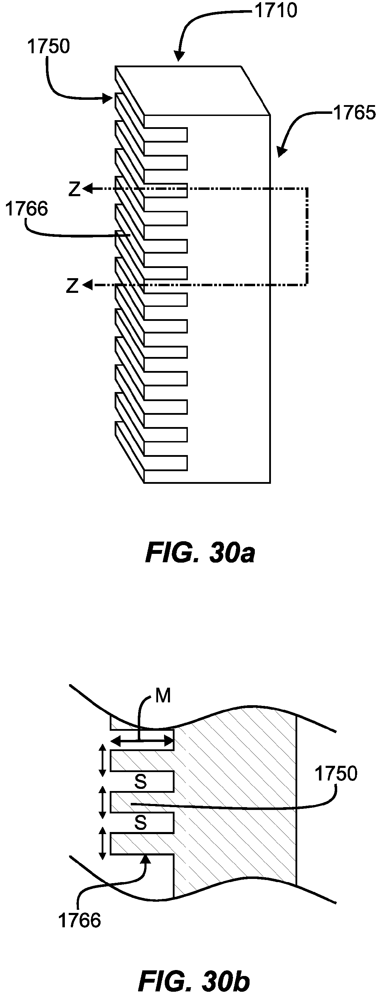

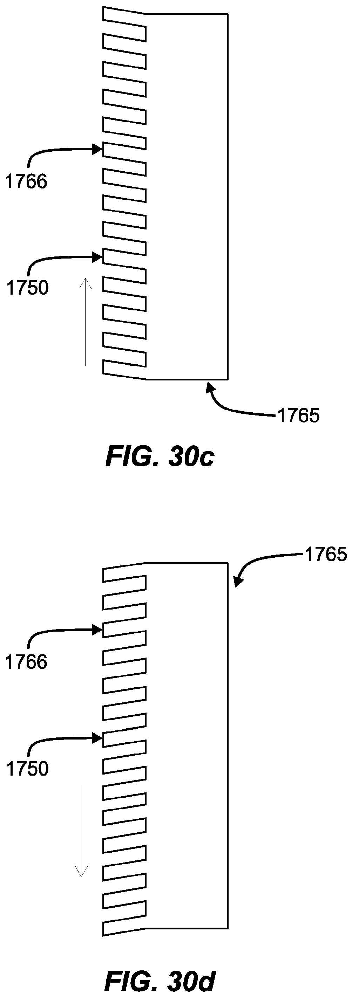

Referring to FIGS. 30a-30d, FIG. 30a is a perspective view of contact surface material 1710 configured as a longitudinal pad 1765 that facilitates reduced friction movement of the equine leg 100 relative to the contact material 1710 while also maintaining sufficient pressure against the skin so that the protective boot 1700 is secured to reduce rotation or slippage of the protective boot 1700 on the equine leg 100. In examples, the protuberances 1750 are configured as rectangular cylinders 1766 having a longitudinal plane M (FIG. 30b) oriented substantially perpendicular to the movement of skin 1760 along arrow 1716 shown in FIG. 22. FIG. 30b is a cross section view taken at line Z-Z of longitudinal pad 1765. Spaces "S" between rectangular cylinders 1766 allow for movement of the rectangular cylinders 1766 in a wave like action as illustrated in FIGS. 30c-30d during movement of the horse and the skin 1760 relative to the contact material 1710. The length and width dimensions of the longitudinal pad 1765 can vary, but typically will be sufficient to substantially underly the length and width of the proximal attachment 1702 at the proximal end of the boot and substantially underly the palmar/plantar aspect of the distal attachment 1704 and the palmar/plantar aspect of the distal shield that may wrap around the plantar/palmar region of the fetlock. In some embodiments, contact material 1710 can be located on the inside of cage 1703 on the medial and/or lateral side at the cannon bone in the region of the proximal attachment 1702.

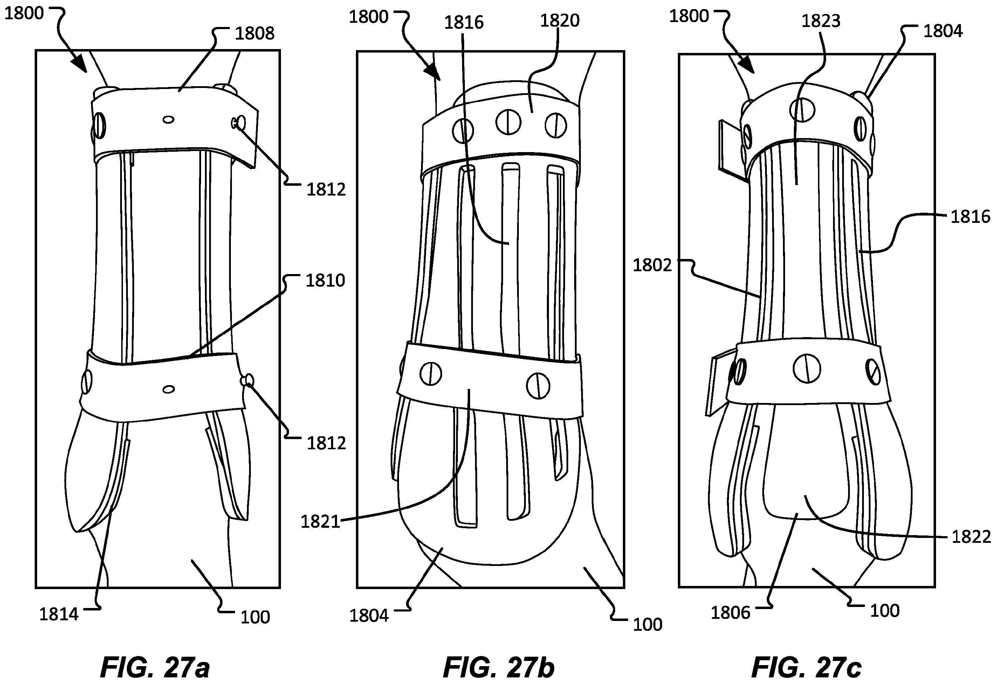

FIGS. 27a-c are dorsal, medial, and palmar/plantar perspective views of a protective boot 1800 for an equine leg 100 and in accordance with the principles described herein. In embodiments, the lateral view of protective boot 1800 may be substantially similar to the medial view. In this example, the protective boot 1800 includes lateral, medial, and palmar/plantar struts 1802, 1804, 1806 extending between proximal connecting member 1820 and distal connecting member 1821. The connecting members may be relatively rigid or pliable and can be an independent component or the same component as a proximal attachment 1808 and/or distal attachment 1810. Each attachment 1808, 1810 includes an adjustable stud fastener 1812 for securing the protective boot 1800 on the equine leg 100. As shown, the attachments 1808, 1810 are coupled to the struts via screws or rivets. In other examples, the attachments 1808, 1810 may be coupled to the struts via adhesive, stitching, welding (e.g., ultrasonic welding), weaving into the struts, and the like and that facilitate the performance of the protective boot as described herein.

Each of the struts 1802, 1804, 1806 may include a contact material 1814 as described herein. The palmar/plantar strut 1806 may not include openings (not shown) and is spaced apart from the lateral and medial struts 1802, 1804. The palmar/plantar strut 1806 may have the same length, or shorter, or longer than the other struts. The palmar/plantar strut 1806 may have an enlarged distal end 1822 when compared to the proximal end 1823. In embodiments, the lateral and medial struts 1802, 1804 include a plurality of openings 1816. The openings 1816 may extend in a vertical direction as shown or any other orientation between proximal and distal ends of the struts. In the example, the openings 1816 may extend at least 90%, 85%, 80%, 75%, 70%, 65%, or 60% of a height of the struts. In the example, the lateral and medial struts 1802, 1804 have a larger width than the palmar/plantar strut 1806.

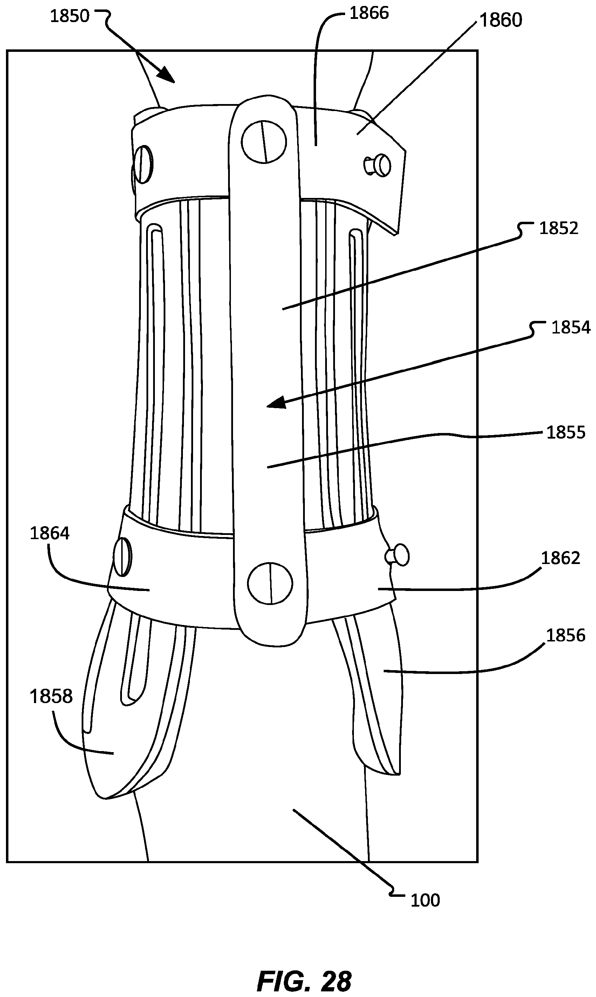

FIG. 28 is a perspective view of another exemplary protective boot 1850 in accordance with the present disclosure. The protective boot 1850 is similar to the protective boot 1800 described above with lateral 1856, medial 1858, and palmar/plantar (not shown) struts extending between the proximal connecting member 1860 and distal connecting member 1862. In the illustrated embodiment the distal attachment 1864 and the proximal attachment 1866 are also connecting members. As in other embodiments, the proximal connecting member 1860 and distal connecting member 1862 may be relatively rigid or pliable. In this embodiment, the protective boot 1850 includes a dorsal strut 1852. The dorsal strut 1852 has an inner surface that couples to the proximal and distal attachments 1866, 1864 such that an outer surface 1854 is substantially smooth. Having a smooth outer surface 1854 without a fastener or attachment strap overlying the outer surface 1854 advantageously provides the benefit that if an outer surface 1855 of protective boot 1850 contacts an obstacle there is reduced friction upon contact of the outer surface 1854 between the obstacle and the outer surface 1854 and less likelihood of injury to the horse or rider. The dorsal strut 1852 in the illustrated embodiment is shown attached to the proximal attachment 1866 and distal attachment 1864 using rivets. In embodiments, the dorsal strut 1852 can be coupled to the proximal and distal attachments 1866, 1864 via adhesive, stitching, welding (e.g., ultrasonic welding), weaving into the struts, and the like. The length of dorsal strut 1852 can vary but typically, the strut should be sized such that during use it will extend from below the horse's carpal joint to above the fetlock joint.

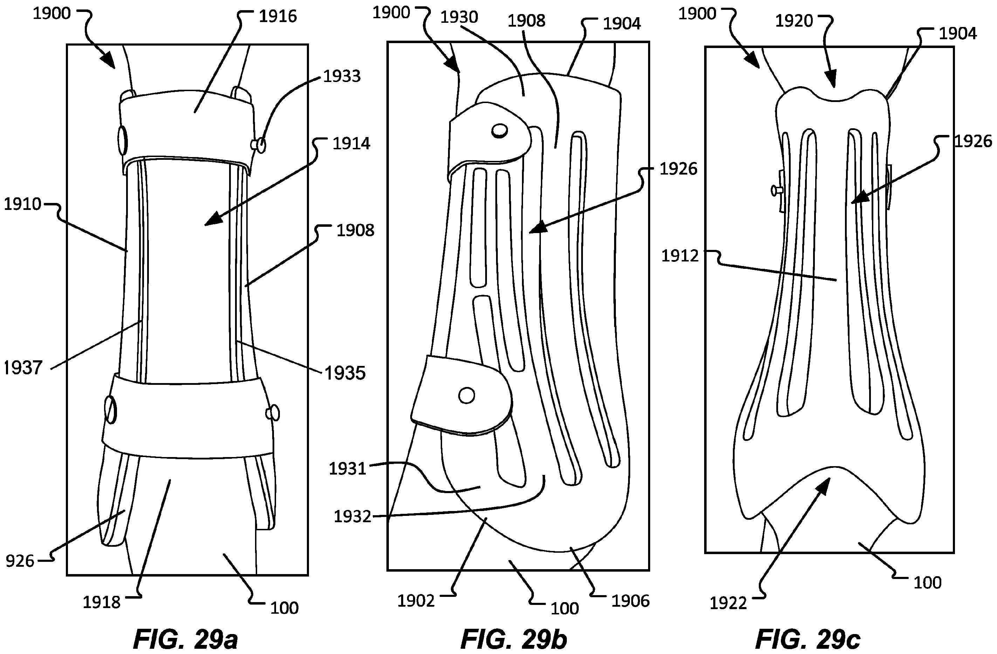

FIGS. 29a-c are dorsal, lateral, and palmar/plantar perspective views of a protective boot 1900 for an equine leg 100 and in accordance with the present disclosure. The medial perspective view is substantially similar to the lateral view. In this example, the protective boot 1900 includes a cage 1902 that in cross-section has a substantially U-shaped configuration with a proximal end 1904 and a distal end 1906. The cage 1902 includes lateral struts 1908, medial struts 1910, and palmar/plantar strut 1912. In this embodiment the proximal connecting member 1930 and distal connecting member 1931 are integrated with the struts 1908, 1910, 1912 forming the U-shaped cage 1902. In alternative examples, openings, reinforcing members as described herein may be present. In this embodiment a distal shield 1932 is integrated with the struts 1908, 1910, 1912 and proximal and distal connecting members 1930, 1931. The lateral and medial struts 1908, 1910 at lateral and medial edges 1935, 1937 define a dorsal opening 1914 extending through the cage 1902 and between the proximal and distal ends 1904, 1906. The material of the cage 1902 may be sufficiently pliable to permit spreading of the lateral and medial struts 1908, 1910 to facilitate applying the protective boot 1900 to the horse's leg. Upon application and release of the lateral and medial struts 1908, 1910, the U-shape conforms to the horse's leg proximally and distally.

A proximal attachment 1916 is disposed adjacent to the proximal end 1904 and a distal attachment 1918 is disposed adjacent to the distal end 1906. In the example, the distal attachment 1918 is disposed above the fetlock joint of the leg 100. The attachments 1916, 1918 extend across the dorsal opening 1914 and between the lateral and medial struts 1908, 1910. In an embodiment, the attachments 1916, 1918 do not extend all the way around the leg 100 and the cage 1902. In an aspect, the attachments 1916, 1918 are fastened by a stud 1933 projecting from the cage 1902 and may be adjustable. In an aspect, the attachments 1916, 1918 may carry a dorsal strut (not shown) as described above.

The palmar/plantar aspect of the proximal connecting member 1930 includes a proximal recess 1920 defined at the proximal end 1904. The palmar/plantar aspect of the distal shield 1932 includes a distal recess 1922 defined at the distal end 1906. The recesses 1920, 1922 facilitate leg movement when the protective boot 1900 is attached and during movement of the equine leg 100.

The protective boot 1900 defines an exterior surface area that has the permeability characteristics described above. As illustrated, the cage 1902 includes a plurality of openings 1926. In the example, the openings 1926 may be defined throughout the cage 1902. The openings 1926 may not all have the same height and/or width. The width may also vary within a single opening as required or desired. Other opening shapes, sizes, and numbers are also contemplated herein and which are described in the examples above.

As with other embodiments discussed herein, protective boot 1900 may include a contact material in some or a portion of cage 1902. The contact material may be configured as rotational and/or longitudinal pads as described for protective boot 1700.

As with other embodiments, in use protective boot 1900, may provide spacing between the struts and the leg to improve air flow around the leg.

Those skilled in the art will recognize that the features of the present disclosure may be implemented in many manners, and as such are not to be limited by the foregoing aspects and examples. In other words, functional elements being performed by a single or multiple components, in various combinations, and individual functions, can be distributed as required or desired. In this regard, any number of the features of the different aspects described herein may be combined into single or multiple aspects, and alternate aspects having fewer than or more than all of the features herein described are possible. Functionality may also be, in whole or in part, distributed among multiple components, in manners now known or to become known. Moreover, the scope of the present disclosure covers conventionally known manners for carrying out the described features and functions, and those variations and modifications that may be made to the components described herein as would be understood by those skilled in the art now and hereafter.

Further, as used herein and in the claims, the phrase "at least one of element A, element B, or element C" is intended to convey any of: element A, element B, element C, elements A and B, elements A and C, elements B and C, and elements A, B, and C. In addition, one having skill in the art will understand the degree to which terms such as "about," "approximately," or "substantially" convey in light of the measurement techniques utilized herein. To the extent such terms may not be clearly defined or understood by one having skill in the art, the term "about" shall mean plus or minus ten percent.

Numerous other changes may be made which will readily suggest themselves to those skilled in the art and which are encompassed in the scope of the invention which is defined in the appended claims. While various aspects have been described for purposes of this disclosure, various changes and modifications may be made which are well within the scope of the disclosure.

## Claims

1. A protective boot (1100) for an animal, the protective boot (1100) comprising:
a cage with a plurality of struts (1102, 1104, 1106) configured to contour to a distal limb (100) of the animal; a proximal connecting member (1108) coupling proximal ends of the plurality of struts (1102, 1104, 1106), the proximal connecting member (1108) including a proximal fastener (1113); and
a distal connecting member (1110) coupling distal ends of the plurality of struts (1102, 1104, 1106), the distal connecting member (1110) including a distal fastener (1114),
wherein the plurality of struts (1102, 1104, 1106) form at least a lateral, a palmar, and a medial protection on the distal limb (100),
wherein the boot (1100) further comprises a contact surface material (1117a-1117c, 1118a-1118c) disposed at least partially on an inner surface of the cage,
**characterized in that** the cage is configured to provide a gap (1116) between the struts (1102, 1104, 1106) and the limb (100) of the animal and **in that** the contact surface material (1117a-1117c, 1118a-1118c) is applied along the struts (1102, 1104, 1106) and configured to still maintain said gap (1116).

2. The protective boot of claim 1, wherein first openings are defined at least partially between the plurality of struts, and at least one second opening is defined within at least one of the plurality of struts.

3. The protective boot of any one of the preceding claims, wherein the cage comprises:
said struts, or said struts and reinforcing members, configured for providing protection to a leg and
openings within the cage that provide permeability of air flow towards and/or around the leg through the protective boot,
optionally wherein the openings present a diameter or largest dimension between 3 and 15 mm.

4. The protective boot of any one of the preceding claims, wherein the plurality of struts, the proximal connecting member, and the distal connecting member define a surface area of the protective boot, and wherein at least 20% of the surface area of the protective boot has an air permeability of at least:
530 liters/meters squared/second (l/m²/s) at a 100 pascal (Pa) pressure drop, or
100 cm³/cm²/s at a 200 pascal (Pa) pressure drop, or
150 cm³/cm²/s at a 200 pascal (Pa) pressure drop, or
250 cm³/cm²/s at a 200 pascal (Pa) pressure drop.

5. The protective boot of any one of the preceding claims, further including an additional component layer to reduce ingress of dirt or dust, provide brush protection, cushioning, impact dissipation, impact absorption impact, moisture wicking, or temperature modulation.

6. The protective boot of claim 5, wherein the additional component layer is attached to at least a portion of the outer surface or the inner surface of the cage and covers cage openings to decrease likelihood of abrasion by sticks, brush, or other objects and/or to reduce accumulation of dirt, sand, or other debris within the protective boot while still facilitating air flow and allowing water to drain out.

7. The protective boot of claim 6, wherein the additional component layer is a single fabric layer that facilitates air flow therethrough.

8. The protective boot of any one of the preceding claims, wherein the contact surface material includes a plurality of protuberances, wherein the protuberances project from the contact material to contact the limb.

9. The protective boot of any one of the preceding claims, wherein the contact surface material comprises at least one of: impact resistant performance foams, natural or synthetic rubber, viscoelastic polymers, elastic polymers such as ethylene vinyl acetate, closed cell materials, polyurethanes, thermoplastic polyurethanes, silicon, nonNewtonian shear thickening type fluids, and combinations thereof.

10. The protective boot of any one of the preceding claims, wherein the contact surface material is provided as local padding in regions where anatomical features of the animal may benefit from increased padding.

11. The protective boot of claim 10, wherein the local padding is positioned near a proximal edge of the protective boot or near a distal edge of the protective boot or is a fetlock padding inside a distal shield positionable around the fetlock joint of the animal.

12. The protective boot of any one of the preceding claims comprising said proximal connecting member (1730), said distal connecting member (1731), a proximal attachment (1702), a distal attachment (1704), with the struts (1706) extending therebetween, wherein the distal connecting member (1731) includes a distal shield (1708) that is configured to extend over a fetlock region of the animal, and wherein the contact surface material (1710) is provided anywhere on the inside of the cage (1703).

13. The protective boot of claim 12, wherein the contact surface material (1710) is constructed in a rotational pad (1712) configuration having protuberances (1750) oriented circumferentially around the rotational pad (1712), optionally wherein a central area (1752) of the rotational pad (1712) is void of protuberances (1750).

14. The protective boot of any one of the preceding claims in combination with claim 4, wherein at least 30% of the surface area of the protective boot has the air permeability value, or at least 40% of the surface area of the protective boot has the air permeability value, or at least 50% of the surface area of the protective boot has the air permeability value.

15. Use of the protective boot according to any one of the preceding claims to protect an equine leg while facilitating air flow circulation around the equine leg.

## Patentansprüche

1. Schützende Manschette (1100) für ein Tier, wobei die schützende Manschette (1100) umfasst:
einen Käfig mit einer Mehrzahl von Streben (1102, 1104, 1106), welche dazu eingerichtet sind, sich an ein distales Glied (100) des Tiers anzupassen;
ein proximales Verbindungselement (1108), welches proximale Enden der Mehrzahl von Streben (1102, 1104, 1106) miteinander koppelt, wobei das proximale Verbindungselement (1108) eine proximale Befestigung (1113) umfasst; und
ein distales Verbindungselement (1110), welches distale Enden der Mehrzahl von Streben (1102, 1104, 1106) miteinander koppelt, wobei das distale Verbindungselement (1110) eine distale Befestigung (1114) umfasst,
wobei die Mehrzahl von Streben (1103, 1104, 1106) wenigstens einen lateralen, einen palmaren und einen medialen Schutz des distalen Glieds (100) bilden,
wobei die Manschette (1100) ferner ein Kontaktflächenmaterial (1117a - 1117c, 1118a - 1118c) umfasst, welches wenigstens teilweise an einer inneren Fläche des Käfigs angeordnet ist,
**dadurch gekennzeichnet, dass** der Käfig dazu eingerichtet ist, einen Spalt (1116) zwischen den Streben (1102, 1104, 1106) und dem Glied (100) des Tiers bereitzustellen, und dass das Kontaktflächenmaterial (1117a - 1117c, 1118a - 1118c) entlang der Streben (1102, 1104, 1106) aufgebracht und dazu eingerichtet ist, den Spalt (1116) weiterhin aufrechterhalten.

2. Schützende Manschette nach Anspruch 1, wobei erste Öffnungen wenigstens teilweise zwischen der Mehrzahl von Streben definiert sind und wenigstens eine zweite Öffnung innerhalb wenigstens einer der Mehrzahl von Streben definiert ist.

3. Schützende Manschette nach einem der vorhergehenden Ansprüche, wobei der Käfig umfasst:
die Streben oder die Streben und verstärkende Elemente, welche eingerichtet sind, um einem Bein einen Schutz bereitzustellen, und
Öffnungen innerhalb des Käfigs, welche eine Permeabilität eines Luftstroms in Richtung des Beins und/oder um das Bein herum durch die schützende Manschette bereitstellen,
wobei die Öffnungen optional einen Durchmesser oder eine größte Abmessung zwischen 3 und 15 mm bieten.

4. Schützende Manschette nach einem der vorhergehenden Ansprüche, wobei die Mehrzahl von Streben, das proximale Verbindungselement und das distale Verbindungselement einen Flächenbereich der schützenden Manschette definieren, und
wobei wenigstens 20 % des Flächenbereichs der schützenden Manschette eine Permeabilität aufweist von wenigstens:
530 Liter/Quadratmeter/Sekunde (l/m²/s) bei einem Druckabfall von 100 Pascal (Pa), oder
100 cm³/cm²/s bei einem Druckabfall von 200 Pascal (Pa), oder
150 cm³/cm²/s bei einem Druckabfall von 200 Pascal (Pa), oder
250 cm³/cm²/s bei einem Druckabfall von 200 Pascal (Pa).

5. Schützende Manschette nach einem der vorhergehenden Ansprüche, ferner umfassend eine zusätzliche Komponentenschicht, um ein Eindringen von Schmutz oder Staub zu verringern, um einen Bürstenschutz, Dämpfung, Stoßableitung, Stoßabsorption, Feuchtigkeitstransport oder Temperaturmodulation bereitzustellen.

6. Schützende Manschette nach Anspruch 5, wobei die zusätzliche Komponentenschicht an wenigstens einem Abschnitt der äußeren Fläche oder der inneren Fläche des Käfigs befestigt ist und Käfigöffnungen abdeckt, um eine Wahrscheinlichkeit von Abrieb durch Stöcke, Bürsten oder andere Gegenstände zu verringern und/oder um eine Ansammlung von Schmutz, Sand oder anderen Ablagerungen innerhalb der schützenden Manschette zu reduzieren, während weiterhin ein Luftstrom gefördert wird und es Wasser ermöglicht wird, abzufließen.

7. Schützende Manschette nach Anspruch 6, wobei die zusätzliche Komponentenschicht eine einzelne Gewebeschicht ist, welche einen Luftstrom hindurch fördert.

8. Schützende Manschette einem der vorhergehenden Ansprüche, wobei das Kontaktflächenmaterial eine Mehrzahl von Vorsprüngen umfasst, wobei die Vorsprünge aus dem Kontaktmaterial vorstehen, um das Glied zu kontaktieren.

9. Schützende Manschette nach einem der vorhergehenden Ansprüche, wobei das Kontaktflächenmaterial wenigstens eines umfasst aus: stoßfesten Leistungsschäumen, Natur- oder Synthetikgummi, viskoelastischen Polymeren, elastischen Polymeren wie etwa Ethylenvinylacetat, geschlossenen Zellmaterialien, Polyurethanen, thermoplastischen Polyurethanen, Silikon, Fluiden vom nichtnewtonschen scherverdickenden Typ und Kombinationen davon.

10. Schützende Manschette nach einem der vorhergehenden Ansprüche, wobei das Kontaktflächenmaterial als lokale Polsterung in Bereichen bereitgestellt ist, in welchen anatomische Merkmale des Tiers von einer erhöhten Polsterung profitieren können.

11. Schützende Manschette nach Anspruch 10, wobei die lokale Polsterung nahe einem proximalen Rand der schützenden Manschette oder nahe einem distalen Rand der schützenden Manschette positioniert ist oder eine Fesselpolsterung innerhalb einer distalen Abschirmung ist, welche um das Fesselgelenk des Tiers positionierbar ist.

12. Schützende Manschette nach einem der vorhergehenden Ansprüche, umfassend das proximale Verbindungselement (1730), das distale Verbindungselement (1731), eine proximale Befestigung (1702), eine distale Befestigung (1704), wobei sich die Streben (1706) dazwischen erstrecken, wobei das distale Verbindungselement (1731) eine distale Abschirmung (1708) umfasst, welche dazu eingerichtet ist, sich über einen Fesselbereich des Tieres zu erstrecken, und wobei das Kontaktflächenmaterial (1710) an einer beliebigen Stelle an der Innenseite des Käfigs (1703) bereitgestellt ist.

13. Schützende Manschette nach Anspruch 12, wobei das Kontaktflächenmaterial (1710) in einer Drehpolster-(1712)-Konfiguration aufgebaut ist, welche Vorsprünge (1750) aufweist, welche umfänglich um das Drehpolster (1712) herum ausgerichtet sind, wobei optional ein zentraler Bereich (1752) des Drehpolsters (1712) frei von Vorsprüngen (1750) ist.

14. Schützende Manschette nach einem der vorhergehenden Ansprüche in Kombination mit Anspruch 4, wobei wenigstens 30 % des Flächenbereichs der schützenden Manschette den Luftpermeabilitätswert aufweisen oder wenigstens 40 % des Flächenbereichs der schützenden Manschette den Luftpermeabilitätswert aufweisen oder wenigstens 50 % des Flächenbereichs der schützenden Manschette den Luftpermeabilitätswert aufweisen.

15. Verwendung der schützenden Manschette nach einem der vorhergehenden Ansprüche, um ein Pferdebein zu schützen, während eine Luftstromzirkulation um das Pferdebein herum gefördert wird.

## Revendications

1. Botte protectrice (1100) pour un animal, la botte protectrice (1100) comprenant :
une cage ayant une pluralité d'entretoises (1102, 1104, 1106) configurées pour entourer un membre distal (100) de l'animal ;
un élément de raccordement proximal (1108) accouplant des extrémités proximales de la pluralité d'entretoises (1102, 1104, 1106), l'élément de raccordement proximal (1108) incluant une attache proximale (1113) ; et
un élément de raccordement distal (1110) accouplant des extrémités distales de la pluralité d'entretoises (1102, 1104, 1106), l'élément de raccordement distal (1110) incluant une attache distale (1114),
dans laquelle la pluralité d'entretoises (1102, 1104, 1106) forment au moins une protection latérale, palmaire, et médiane sur le membre distal (100),
dans laquelle la botte (1100) comprend en outre un matériau de surface de contact (1117a-1117c, 1118a-1118c) disposé au moins partiellement sur une surface interne de la cage,
**caractérisée en ce que** la cage est configurée pour fournir un espace (1116) entre les entretoises (1102, 1104, 1106) et le membre (100) de l'animal et **en ce que** le matériau de surface de contact (1117a-1117c, 1118a-1118c) est appliqué le long des entretoises (1102, 1104, 1106) et configuré pour maintenir encore ledit espace (1116).

2. Botte protectrice selon la revendication 1, dans laquelle de premières ouvertures sont définies au moins partiellement entre la pluralité d'entretoises, et au moins une seconde ouverture est définie à l'intérieur d'au moins l'une de la pluralité d'entretoises.

3. Botte protectrice selon l'une quelconque des revendications précédentes, dans laquelle la cage comprend :
lesdites entretoises, ou lesdites entretoises et éléments de renforcement, configurés·es pour fournir une protection à une jambe et
des ouvertures à l'intérieur de la cage qui fournissent de la perméabilité à un flux d'air vers et/ou autour de la jambe à travers la botte protectrice,
éventuellement dans laquelle les ouvertures présentent un diamètre ou une dimension la plus grande compris·e entre 3 et 15 mm.

4. Botte protectrice selon l'une quelconque des revendications précédentes, dans laquelle la pluralité d'entretoises, l'élément de raccordement proximal, et l'élément de raccordement distal définissent une zone de surface de la botte protectrice, et dans laquelle au moins 20 % de la zone de surface de la botte protectrice présente une perméabilité à l'air d'au moins :
530 litres/mètre carré/seconde (l/m²/s) à une chute de pression de 100 pascals (Pa), ou
100 cm³/cm²/s à une chute de pression de 200 pascals (Pa), ou
150 cm³/cm²/s à une chute de pression de 200 pascals (Pa), ou
250 cm³/cm²/s à une chute de pression de 200 pascals (Pa).

5. Botte protectrice selon l'une quelconque des revendications précédentes, incluant en outre une couche composante additionnelle pour réduire l'entrée de saleté ou de poussière, pour fournir une protection contre le brossage, un molletonnage, une dissipation d'impact, une absorption d'impact, un effet mèche à l'humidité, ou une modulation de température.

6. Botte protectrice selon la revendication 5, dans laquelle la couche composante additionnelle est fixée à au moins une portion de la surface externe ou de la surface interne de la cage et recouvre des ouvertures de cage pour réduire la probabilité d'abrasion par des bâtons, une brosse, ou d'autres objets et/ou pour réduire l'accumulation de saleté, de sable, ou d'autres débris à l'intérieur de la botte protectrice tout en facilitant encore le flux d'air et en permettant à l'eau de s'écouler vers l'extérieur.

7. Botte protectrice selon la revendication 6, dans laquelle la couche composante additionnelle est une couche de textile unique qui facilite le flux d'air à travers.

8. Botte protectrice selon l'une quelconque des revendications précédentes, dans laquelle le matériau de surface de contact inclut une pluralité de protubérances, dans laquelle les protubérances se projettent depuis le matériau de contact pour entrer en contact avec le membre.

9. Botte protectrice selon l'une quelconque des revendications précédentes, dans laquelle le matériau de surface de contact comprend au moins l'un parmi : des mousses à performance de résistance aux chocs, un caoutchouc d'origine naturelle ou synthétique, des polymères viscoélastiques, des polymères élastiques tels que l'acétate d'éthylène-vinyle, des matériaux à alvéoles fermées, des polyuréthanes, des polyuréthanes thermoplastiques, de la silicone, des fluides de type à épaississement à cisaillement type non newtonien, et leurs combinaisons.

10. Botte protectrice selon l'une quelconque des revendications précédentes, dans laquelle le matériau de surface de contact est fourni sous la forme d'un molletonnage local dans des régions où des caractéristiques anatomiques de l'animal peuvent bénéficier d'un molletonnage accru.

11. Botte protectrice selon la revendication 10, dans laquelle le molletonnage local est positionné près d'un bord proximal de la botte protectrice ou près d'un bord distal de la botte protectrice ou est un molletonnage de boulet à l'intérieur d'une protection distale pouvant être positionnée autour de l'articulation du boulet de l'animal.

12. Botte protectrice selon l'une quelconque des revendications précédentes comprenant ledit élément de raccordement proximal (1730), ledit élément de raccordement distal (1731), une fixation proximale (1702), une fixation distale (1704), avec les entretoises (1706) s'étendant à travers, dans laquelle l'élément de raccordement distal (1731) inclut une protection distale (1708) qui est configurée pour s'étendre sur une région de boulet de l'animal, et dans laquelle le matériau de surface de contact (1710) est prévu n'importe où à l'intérieur de la cage (1703).

13. Botte protectrice selon la revendication 12, dans laquelle le matériau de surface de contact (1710) est construit sous une configuration de tampon rotationnel (1712) ayant des protubérances (1750) orientées circonférentiellement autour du tampon rotationnel (1712), éventuellement dans laquelle une zone centrale (1752) du tampon rotationnel (1712) est dépourvue de protubérances (1750).

14. Botte protectrice selon l'une quelconque des revendications précédentes en combinaison avec la revendication 4, dans laquelle au moins 30 % de la zone de surface de la botte protectrice présente la valeur de perméabilité à l'air, ou au moins 40 % de la zone de surface de la botte protectrice présente la valeur de perméabilité à l'air, ou au moins 50 % de la zone de surface de la botte protectrice présente la valeur de perméabilité à l'air.

15. Utilisation de la botte protectrice selon l'une quelconque des revendications précédentes pour protéger une jambe équine tout en facilitant une circulation d'un flux d'air autour de la jambe équine.
